(19) Europäisches Patentamt
European Patent Office
Office européen des brevets

(11) EP 1 908 807 A1

(12) **EUROPEAN PATENT APPLICATION**
published in accordance with Art. 153(4) EPC

(43) Date of publication:
**09.04.2008 Bulletin 2008/15**

(21) Application number: **06781809.6**

(22) Date of filing: **27.07.2006**

(51) Int Cl.:
***C09D 133/00*** (2006.01) ***B05D 1/36*** (2006.01)
***B05D 5/06*** (2006.01) ***B05D 7/24*** (2006.01)
***C09D 5/02*** (2006.01) ***C09D 5/29*** (2006.01)
***C09D 151/00*** (2006.01) ***C09D 161/28*** (2006.01)

(86) International application number:
**PCT/JP2006/314898**

(87) International publication number:
**WO 2007/013558 (01.02.2007 Gazette 2007/05)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.07.2005 JP 2005217613**
**02.09.2005 JP 2005255210**
**02.09.2005 JP 2005255215**

(71) Applicant: **Nippon Paint Co., Ltd.**
**Osaka-shi, Osaka 531-8511 (JP)**

(72) Inventors:
- **HAYASHI, Kouki,**
**c/o NIPPON PAINT CO., LTD.**
**Takahama-shi,**
**Aichi 4441301 (JP)**
- **OHARA, Kouichi,**
**c/o NIPPON PAINT CO., LTD.**
**Takahama-shi,**
**Aichi 4441301 (JP)**
- **OGAWA, Hideaki,**
**c/o NIPPON PAINT CO., LTD.**
**Neyagawa-shi,**
**Osaka 5728501 (JP)**
- **ASAI, Tomohito,**
**c/o NIPPON PAINT CO., LTD.**
**Neyagawa-shi,**
**Osaka 5728501 (JP)**
- **YONEDA, Hiroto,**
**c/o NIPPON PAINT CO., LTD.**
**Neyagawa-shi,**
**Osaka 5728501 (JP)**

(74) Representative: **Jones, Helen M.M.**
**Gill Jennings & Every LLP**
**Broadgate House**
**7 Eldon Street**
**London EC2M 7LH (GB)**

# (54) WATER-BASED METALLIC COATING COMPOSITION AND METHOD OF FORMING MULTILAYERED COATING FILM

(57) Purpose of the present invention is consists in provision of a water-borne metallic color coating composition, a two-coating and one-baking application method therewith, and a multilayered coating film having an excellent flip-flop property thereby, wherein the water-borne metallic color coating composition has superior properties such as coloring property, recoat adhesion, chipping resistance, water-resistant adhesion, and the like. The water-borne metallic color coating composition can provide a coating film having the above-superior properties and an excellent flip-flop property, by a two-coating and one-baking application method, without disturbing the orientation of the luster color pigment(s) therein before/after an application of a clear coating composition and without adversely effecting on the flip-flop property.

The present invention provides a water-borne metallic color coating composition comprising a film forming resin, a curing agent and a luster color pigment, wherein the film forming resin comprises an acrylic resin emulsion, which is obtainable by a two-stage emulsion polymerization, and which has an acid value within a range of from 1 to 30 mgKOH/g (as a basis of the solid resin content), a hydroxyl value within a range of from 10 to 150 mgKOH/g (as a basis of the solid resin content), and a particle size within a range of from 20 to 140 nm, and the curing agent is an aqueous dispersion of a hydrophobic melamine resin having a particle size within a range of from 20 to 140 nm.

EP 1 908 807 A1

## Description

### TECHNICAL FIELD

The present invention relates to a water-borne metallic color coating composition, a method for forming a multilayered coating film therewith, and a multilayered coating film obtainable by the method therefor.

### BACKGROUND ART

Water-borne coating composition employed in an automobile coating procedure includes a coating composition comprising a resin (e.g., an acrylic resin having a functional group, such as a carboxyl group and a hydroxyl group) and a melamine resin as a crosslinking agent. A hydrophobic melamine resin is often used as a crosslinking agent for a water-borne coating composition, though it is used in an aqueous medium.

When the hydrophobic melamine resin is used as a crosslinking agent in a water-borne coating composition, there exists a problem that poor water-dispersibility is provided. As a technology for solving such problem, Japanese Patent Application Publication Nos. S53-99232 and 2004-315623 propose that a water-borne resin dispersion obtained by a reaction of a hydrophobic melamine resin with a resin having a specific acid value, a specific hydroxyl value and a specific molecular weight, such as an acrylic resin, an alkyd resin or the like, is used as a crosslinking agent, but the desired water-dispersibility cannot be provided.

Japanese Patent Application Publication No. 2002-308993 discloses a water-borne resin dispersion that comprises a reaction product obtained by heating an acrylic resin (A) having a weight average molecular weight within a range of from 5000 to 100000, an acid value within a range of from 10 to 100 mgKOH/g and a hydroxyl value within a range of from 20 to 200 mgKOH/g; a hydrophobic melamine resin (B); and a polyester resin (C). The water-borne resin dispersion has an increased viscosity ratio (i.e., viscosity after heating/viscosity before heating) within a range of from 20 to 200%. This is carried out for improving properties such as water-dispersibility by modifying the hydrophobic melamine resin with a resin having a high acid value such as an acrylic resin.

On the other hand, Japanese Patent Application Publication Nos. S63-193968 and H07-041729 propose that a water-borne resin dispersion obtained by dispersing a hydrophobic melamine resin and a resin having a specific acid value, a specific hydroxyl value and a specific molecular weight, such as a graft resin, an acrylic resin, an alkyd resin or the like, into a water-borne metallic color coating composition is used as a crosslinking agent, but the desired water-dispersibility cannot be provided.

#### *Approach to the Invention*

The present inventors filed several patent applications and proposed water-borne coloring coating compositions essentially comprises an acrylic resin and a hydrophobic melamine resin (Japanese Patent Application Nos. 2004-332110 and 2004-349019). These technologies can improve the dispersibility of the hydrophobic melamine resin and can provide a coating film having a superior color property, a superior recoat adhesion, a superior chipping resistance and a superior water-resistant adhesion.

However, in the case that the above-mentioned water-borne coloring coating composition is used as a metallic color base coating composition, when the metallic color base coating composition is utilized in a method for a formation of a metallic color multilayered coating film, which includes steps of applying the metallic color base coating composition to form a metallic color base coating; applying a clear coating composition on the uncured metallic color base coating to form a clear coating; heating (or curing) both of the metallic color base coating and the clear coating at once; which is a so-called a two-coating and one-baking application procedure, there may be an apparent difference between the appearance of the metallic color coating film itself and the appearance of the metallic color coating film covered with the clear coating film. Generally, in the two-coating and one-baking application procedure to form a metallic color base coating film and a clear coating film thereon, a pre-heating step wherein drying is carried out at a low temperature for a short period (e.g., at about 80˚C and for about 5 minutes) is inserted between the application of the metallic color base coating composition and the application of the clear coating composition. However, the pre-heating can not appropriately fix the luster color pigment therein. As shown in FIG. 1, during applying a clear coating composition on the uncured metallic color base coating composition, the clear coating composition (mostly in an organic solvent type) adversely effects on the metallic color base coating film. As shown in FIG. 1, it is considered that the orientation of the luster color pigment is disturbed. It is ideal that the orientation of the luster color pigment is arranged in parallel as shown in FIG.2.

## DISCLOSURE OF INVENTION

*Problem to be Solved by the Invention*

Purpose of the present invention is consists in provision of a water-borne metallic color coating composition, a two-coating and one-baking application method therewith, and a multilayered coating film having an excellent flip-flop property thereby, wherein the water-borne metallic color coating composition has superior properties such as a coloring property, a recoat adhesion, a chipping resistance, a water-resistant adhesion, and the like, which corresponds to those of the coating compositions provided by the present inventors as described above. The present water-borne metallic color coating composition can provide a coating film having the above-superior properties and an excellent flip-flop property, by a two-coating and one-baking application method, without disturbing the orientation of the luster color pigment (s) therein before/after application of a clear coating composition and without adversely effecting on the flip-flop property.

*Means for Solving the Problem*

Accordingly, the present invention can provide a water-borne metallic color coating composition comprising a film forming resin, a curing agent and a luster color pigment, wherein
the film forming resin comprises an acrylic resin emulsion, which is obtainable by a two-stage emulsion polymerization, and which has an acid value within a range of from 1 to 30 mgKOH/g (as a basis of the solid resin content), a hydroxyl value within a range of from 10 to 150 mgKOH/g (as a basis of the solid resin content), and a particle size within a range of from 20 to 140 nm, and
the curing agent is an aqueous dispersion of a hydrophobic melamine resin having a particle size within a range of from 20 to 140 nm.
The acrylic resin emulsion according to the present invention is preferably obtainable by a two-stage emulsion polymerization of a monomer mixture comprising 0.05 to 30.0% by weight of an unsaturated monomer having at least two unsaturated double bonds relative to the weight of the solid content of the film forming resin.
The unsaturated monomer having at least two unsaturated double bonds is selected from the group consisting of ethylene glycol di(meth)acrylate, diethylene glycol di(meth)acrylate, trimethylolpropane di(meth)acrylate, trimethylolpropane tri(meth)acrylate, glycerin di(meth)acrylate and allyl (meth)acrylate.
The film forming resin may further comprise 0.01 to 10% by weight of a polyoxyalkylene compound having the formula (1):

$$H(-OR)_f\text{-}OH \qquad (1)$$

wherein
R is an alkyl group having 2 to 5 carbon atoms, which may have a branched chain, and
f is an integer of 100 to 18000,
relative to the weight of the solid resin content in the coating composition.
The polyoxyalkylene compound according to the present invention preferably has a weight average molecular weight (Mw) within a range of from 10000 to 1000000.
The water-borne metallic color coating composition of the present invention may further comprise a viscosity improving agent comprising a mixture of an urethane compound

(A) represented by the general formula (1):

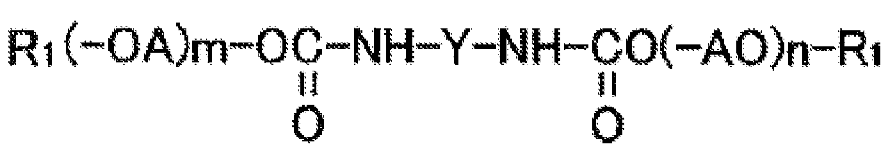

(1)

,

and a urethane compound (B) represented by the general formula (2) :

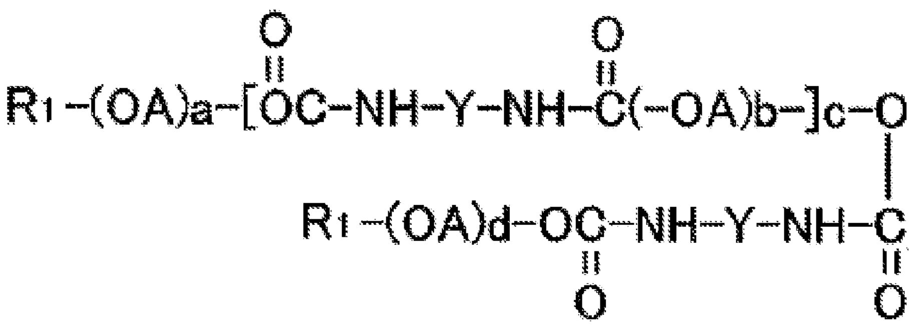

(2)

wherein
$R_1$ is the same or different and represents a hydrocarbon group having 8 to 24 carbon atoms,
Y represents a reactive residual group resulted from elimination of an isocyanate group from a diisocyanate,
OA and AO independently represent an oxyalkylene group having 2 to 4 carbon atoms,
O represents an oxygen atom,
C represents a carbon atom,
N represents a nitrogen atom,
m and n independently represent an integer of 20 to 500,
a and d independently represent an integer of 1 to 100,
b represents an integer of 40 to 500,
c represents an integer of 1 to 5,
(b x c) is 150 to 2500,
f represents an integer of 200 to 25000, and
R, Y and P may be independently the same or different, wherein each urethane compound has at least 80% by weight of oxyethylene group(s) relative to the total weight of oxyalkylene group(s), and
wherein the weight ratio of the urethane compound (A) / the urethane compound (B) is within a range of from 95/5 to 5/95, and the total content of the urethane compounds (A) and (B) is within a range of from 0.2 to 4.0% by weight relative to the solid resin content in the water-borne metallic color coating composition.

The present invention further provides a method for forming a multilayered coating film, which comprises:

Step (I) of applying a water-borne base coating composition on an article to form a base coating;
Step (II) of applying a clear coating composition on the base coating, without curing the base coating, to form a clear coating; and
Step (III) of simultaneously heating the base coating and the clear coating,

wherein the water-borne base coating composition is the water-borne metallic color coating composition as described above.

*Effect of the Invention*

The water-borne metallic color coating composition according to the present invention comprises an acrylic resin emulsion, as a film forming resin, which is obtainable by a two-stage emulsion polymerization, and which has an acid value within a range of from 1 to 30 mgKOH/g, a hydroxyl value within a range of from 10 to 150 mgKOH/g, and a particle size within a range of from 20 to 140 nm. The disturbance of the orientation of the metallic color pigment therein can be effectively prevented. In particular, in the case that the acrylic resin emulsion used as the film forming resin comprises a monomer such as an unsaturated monomer having at least two unsaturated double bonds in the molecule, the emulsion has a three-dimensional structure in the core portion, shell portion or the both portions. Accordingly, the disturbance of the orientation of the metallic color pigment in the water-borne metallic color coating composition can be more effectively prevented after application of a clear coating composition thereon, even if the clear coating composition (in particular, an organic solvent type clear coating composition) effected thereon.

The water-borne metallic color coating composition according to the present invention may further comprise a specific polyoxyalkylene compound. The compound can much effectively prevent the disturbance of the orientation of the luster color pigment.

According to the present invention, the water-borne metallic color coating composition may further comprise

a mixture of the urethane compound (A) represented by the general formula (1) and the urethane compound (B) represented by the general formula (2) in a given proportion. It can prevent the disturbance of the orientation of the metallic color pigment as well.

The water-borne metallic color coating composition according to the present invention can provide a coating film having naturally superiorcolor property. Further, the method for forming a multilayered coating film with the water-borne metallic color coating composition can provide a multilayered coating film superior in a recoat adhesion, a chipping resistance, a water-resistant adhesion and a color property.

## BRIEF DESCRIPTION OF DRAWINGS

FIG. 1 is a schematic sectional view of a coating film having a deteriorated flip-flop property by an application of a clear coating composition after application of a water-borne base coating composition, which shows a state of luster color pigments in the base coating film.

FIG. 2 is a schematic sectional view of a coating film having an excellent flip-flop property.

## BEST MODE FOR CARRYING OUT THE INVENTION

The present invention is described below in detail.

### *Water-borne metallic color coating composition*

The water-borne metallic color coating composition according to the present invention comprises a film forming resin, a curing agent and a luster color pigment. The film forming resin is obtainable bya two-stage emulsion polymerization. The film forming resin comprises an acrylic resin emulsion having an acid value within a range of from 1 to 30 mgKOH/g (as a basis of the solid resin content), a hydroxyl value within a range of from 10 to 150 mgKOH/g (as a basis of the solid resin content), and a particle size within a range of from 20 to 140 nm. The curing agent includes an aqueous dispersion of a hydrophobic melamine resin having a particle size within a range of from 20 to 140 nm. Monomer to be used for the two-stage emulsion polymerization is preferably a monomer mixture comprising 0.05 to 30.0% by weight of an unsaturated monomer having at least two unsaturated double bonds relative to the solid content of the film forming resin.

As described above, it is preferable that the acrylic monomer includes an unsaturated monomer having at least two unsaturated double bonds when the acrylic resin emulsion as the film forming resin is prepared. In the case that the unsaturated monomer having at least two unsaturated double bonds is used in forming the acrylic resin emulsion, a crosslinking reaction proceeds in the acrylic resin emulsion and the three-dimensional acrylic resin emulsion is obtained.

Although the present invention is not bound with a specific theory, it is understood according to the following reason that the disturbance of the orientation of the metallic color pigment can be prevented by using the three-dimensional acrylic resin emulsion. It is considered that the disturbance of the orientation of the metallic color pigment which is resulted from applying a metallic base coating composition and then applying a clear coating composition thereon can be effectively prevented according to the present invention. It is considered the disturbance seems to be caused by the solvent contained in the clear coating composition penetrating into the metallic base coating upon applying the clear coating composition thereon, and by the resulting swelled particles in the acrylic resin emulsion. Therefore, use of the three-dimensional acrylic resin emulsion can prevent the swelling caused by the solvent contained in the clear coating composition and prevent the disturbance of the orientation of the metallic color pigment.

Furthermore, the above-mentioned water-borne metallic color coating composition is used in the formation of a multilayered coating film by an automobile coating process, wherein a coating composition comprising the above-mentioned acrylic resin emulsion and the above-mentioned aqueous dispersion of the hydrophobic melamine resin having a particle size within a range of from 20 to 140 nm is employed. Therefore, the resulting multilayered coating film is superior in a recoat adhesion, a chipping resistance and a water-resistant adhesion. Consequently, the above-mentioned water-borne metallic color coating composition can be preferably used in the method for forming a multilayered coating film in an automobile coating procedure.

### *Film forming resin*

The above-mentioned film forming resin comprises an acrylic resin emulsion, which is obtainable by a two-stage emulsion polymerization, and which has an acid value within a range of from 1 to 30 mgKOH/g (as a basis of the solid resin content), a hydroxyl value within a range of from 10 to 150 mgKOH/g (as a basis of the solidresin content), and a particle size within a range of from 20 to 140 nm. The monomer used for the two-stage emulsion polymerization is preferably a monomer mixture comprising 0.05 to 30.0% by weight of an unsaturated monomer having at least two

unsaturated double bonds relative to the solid content of the film forming resin.

*Acryl resin emulsion*

The above-mentioned acrylic resin emulsion has an acid value within a range of from 1 to 30 mgKOH/g (as a basis of the solid resin content). When it is less than 1 mgKOH/g, there is a fear that stability of the emulsion is lowered. When it exceeds 30 mgKOH/g, there is a fear that the water resistance of the resulting coating film is lowered. It is preferably within a range of from 3 to 25 mgKOH/g.

The above-mentioned acrylic resin emulsion has a hydroxyl value within a range of from 10 to 150 mgKOH/g. When it is less than 10 mgKOH/g, there is a fear that the physical properties of the resulting coating film are deteriorated. When it exceeds 150 mgKOH/g, there is a fear that the water resistance of the resulting coating film is lowered. It is preferably within a range of from 15 to 120 mgKOH/g. Herein, the acid value of the above-mentioned acrylic resin emulsion is a found measured value, and the hydroxyl value is a calculated value determined by the content of the unsaturated monomer(s) used for the synthesis.

The particle size of the above-mentioned acrylic resin emulsion is within a range of from 20 to 140 nm. When the above-mentioned particle size is less than 20 nm, there is a fear that the solid content (NV) in the coating composition is remarkably decreased. When it exceeds 140 nm, there is a fear that the color properties of the resulting coating film are deteriorated.

Adjustment of the particle size is possible, for example, by adjusting the monomer formulation and the emulsion polymerization conditions. The particle size is more preferably within a range of from 30 to 120 nm, and further preferably within a range of from 50 to 100 nm. Herein, the particle size of the acrylic resin emulsion or the hydrophobic melamine resin emulsion according to the present invention is an average dispersion particle size measured with ELS-800 (manufactured by OTSUKA ELECTRONICS CO., LTD.) under the following conditions:

Sample: infinite dilution with ion-exchanged water
Measurement temperature: 25˚C.

Particularly, the above-mentioned acrylic resin emulsion preferably includes an emulsion obtainable by an emulsion polymerization described below with an unsaturated monomer having at least two unsaturated double bonds, as well as, as a starting material, an unsaturated monomer containing a carboxylic acid group, an unsaturated monomer containing a hydroxyl group, or the like. Herein, the acrylic resin emulsion employed in the present invention is preferably a so-called core-shell type acrylic resin emulsion having a core portion and a shell portion according to a two-stage emulsion polymerization.

When the above-mentioned film forming resin comprises the core-shell type acrylic resin emulsion, the above-mentioned core portion is preferably one obtainable by an emulsion polymerization of a core-monomer mixture comprising a carboxylic acid group containing-unsaturated monomer, which has an acid value within a range of from 0 to 100 mgKOH/g. When it exceeds 100 mgKOH/g, there is a fear that the water resistance of the resulting coating film is lowered. It is more preferably within a range of from 0 to 50 mgKOH/g. Herein, the acid value of the above-mentioned core portion is an acid value of the acrylic resin emulsion obtainable by the first emulsion polymerization, which is a calculated value determined by the monomer content in the above-mentioned core-monomer mixture.

The above-mentioned shell portion is preferably one obtainable by an emulsion polymerization with a shell-monomer mixture comprising a carboxylic acid group-containing unsaturated monomer, which has an acid value within a range of from 25 to 200 mgKOH/g. When the above-mentioned acid value is less than 25 mgKOH/g, there is a fear that the stability of the emulsion is lowered and there is a fear that the coating workability is inadequate. When it exceeds 200 mgKOH/g, there is a fear that the water resistance of the resulting coating film is lowered. It is more preferably within a range of from 30 to 180 mgKOH/g. Herein, the acid value of the above-mentioned shell portion is a calculated value determined by the monomer content in the above-mentioned shell-monomer mixture.

The above-mentioned core-monomer mixture and/or the above-mentioned shell-monomer mixture include(s) a conventional acrylic monomer. It is preferable that the acryl monomer comprises an unsaturated monomer having at least two unsaturated double bonds as an essential monomer. The unsaturated monomer having at least two unsaturated double bonds forms a crosslinking structure in the emulsion particles. It is more effective so as not to be subjected to any adverse influences by a clearcoating composition to be coated thereon. The unsaturated monomer having at least two unsaturated double bonds may be contained in either the core-monomer mixture or the shell-monomer mixture, or both of the core-monomer mixture and the shell-monomer mixture. It is preferable for minimizing the adverse influences by the clear coating composition that both of the core-monomer mixture and the shell-monomer mixture include the unsaturated monomer having at least two unsaturated double bonds. The amount of the unsaturated monomer having at least two unsaturated double bonds to be used is within a range of from 0.05 to 30.0% by weight, preferably within a range of from 0.5 to 10.0% by weight, and more preferably within a range of from 1.0 to 5.0% by weight relative to the

weight of the solid content in the film forming resin. When it is less than 0.05% by weight, the effect of the addition of the monomer is not obtained. When it exceeds 30.0% by weight, it is difficult to prepare the acrylic resin emulsion.

The above-mentioned core-monomer mixture and/or the above-mentioned shell-monomer mixture may have a hydroxyl group. The above-mentioned hydroxyl value is within a range of from 10 to 150 mgKOH/g, and preferably 15 to 120 mgKOH/g. When the above-mentioned hydroxyl value is less than 10 mgKOH/g, there is a fear that an adequate curing property is not obtained. When it exceeds 150 mgKOH/g, there is a fear that the various performances of the resulting coating film are lowered.

Furthermore, the above-mentioned core-monomer mixture and/or the above-mentioned shell-monomer mixture may comprise the above-mentioned other ethylenically unsaturated monomer. Herein, glass transition temperature (Tg) of the above-mentioned core-shell type acrylic resin emulsion is preferably within a range of from -20 to 80˚C from the aspect of the physical properties of the resulting coating film.

The carboxylic acid group-containing unsaturated monomer includes, but is not specifically limited to, for example, acrylic acid, methacrylic acid, dimeric acrylic acid, crotonic acid, 2-acryloyloxyethyl phthalate, 2-acryloyloxyethyl succinate, 2-acryloyloxyethylacid phosphate, 2-acrylamide-2-methylpropane sulfonate, ω-carboxy-polycaprolactone mono(meth)acrylate, isocrotonic acid, α-hydro-ω-[(1-oxo-2-propenyl)oxy]-poly[oxy(1-oxo-1,6-hexanediyl)], maleic acid, fumaric acid, itaconic acid, 3-vinylsalicilic acid, 3-vinylacetylsalicylic acid, and the like.

The hydroxyl group-containing unsaturated monomer includes, for example, hydroxyethyl (meth)acrylate, hydroxypropyl (meth)acrylate, hydroxybutyl (meth)acrylate, allyl alcohol, methacryl alcohol, and the adduct of hydroxyethyl (meth) acrylate with ε-caprolactone. Among these, hydroxyethyl (meth)acrylate, hydroxybutyl (meth)acrylate, the adduct of hydroxyethyl (meth)acrylate with ε-caprolactone, and the like are preferable.

The above-mentioned other ethylenically unsaturated monomer includes, for example, (meth)acrylate esterwherein the ester portion has 1 or 2 carbon atoms [i.e., methyl (meth)acrylate and ethyl (meth)acrylate]; (meth)acrylate ester wherein the ester portion has 3 or more carbon atoms [e.g., n-butyl (meth)acrylate, isobutyl (meth)acrylate, t-butyl (meth)acrylate, 2-ethylhexyl (meth)acrylate, lauryl methacrylate, phenyl acrylate, isobornyl (meth)acrylate, cyclohexyl methacrylate, t-butylcyclohexyl (meth)acrylate, dicyclopentadienyl (meth)acrylate, dihydrodicyclopentadienyl (meth)acrylate, and the like], polymerizable amido compounds [e.g., (meth)acrylamide, N-methylol(meth)acrylamide, N,N-dimethyl (meth)acrylamide, N,N-dibutyl(meth)acrylamide, N,N-dioctyl(meth)acrylamide, N-monobutyl(meth)acrylamide, N-monooctyl(meth)acrylamide, 2,4-dihydroxy-4'-vinylbezophenone, N-(2-hydroxyethyl) acrylamide, N-(2-hydroxyethyl)methacrylamide, and the like]; polymerizable aromatic compounds [e.g., styrene, α-methylstyrene, vinyl ketone, t-butylstyrene, para-chlorostyrene, vinylnaphthalene, and the like]; polymerizable nitriles [e.g., acrylonitrile, methacrylonitrile, and the like]; α-olefins [e.g., ethylene, propylene, and the like]; and vinyl esters [e.g., vinyl acetate, vinyl propionat, and the like], and the like.

It is more preferable that the unsaturated monomer having at least two unsaturated double bonds is used for the above-mentioned core-monomer mixture and/or the above-mentioned shell-monomer mixture. The unsaturated monomer having at least two unsaturated double bonds includes, but is not specifically limited to, a vinyl monomer having at least two radically polymerizable unsaturated groups in the molecule. Specifically, examples thereof include vinyl compounds such as divinylbenzene, and divinylsulfone; (meth)allyl compounds such as (meth)allyl (meth)acrylate (hereinafter, both of allyl and methallyl are represented by an expression of (meth) allyl), diallyl phthalate or dimethallyl phthalate, di(meth)allyl (meth)acrylamide, tri(meth)allyl cyanurate or tri(meth)allyl isocyanurate, tri(meth)allyl trimellitate, and bis((meth)allyl nadimide); mono or poly-oxyalkylene glycol di(meth)acrylate such as mono or poly-ethylene glycol di(meth)acrylate, and mono or poly-propylene glycol di(meth)acrylate; (meth)acrylate compounds such as trimethylolpropane tri(meth)acrylate, pentaerythritol di(meth)acrylate, pentaerythritol tri(meth)acrylate, and glycerol tri(meth)acrylate. In addition, allyloxy polyethylene glycol polypropylene glycol monoacrylate (BLEMMER AKEP manufactured by NOF Corporation), dicyclomenthenyl acrylate (FANCRYL FA-511A manufactured by Hitachi Chemical Co., Ltd.), dicyclomenthenyloxyethyl acrylate (FANCRYL FA-512A manufactured by HitachiChemicalCo., Ltd.), dicyclomenthenyloxyethyl methacrylate (FANCRYL FA-512M manufactured by Hitachi Chemical Co., Ltd.), dihydrodicyclopentadienyl acrylate (commercially available from BASF Gesellshaft), 3-cyclohexenylmethyl methacrylate (commercially available from DAICEL Chemical Industries Ltd.), 3-cyclohexenylmethyl acrylate (commercially available from DAICEL Chemical Industries Ltd.), butanediol-1,4-divinyl ether (commercially available from BASF Gesellshaft) and triallyl isocyanulate (TAIC manufactured by Nippon Kasei Chemical Co., Ltd.) are commercially available. Among others, allylmethacrylate and ethyleneglycol di(meth)acrylate are preferable in the present invention. Particularly, in the case that the distance between the unsaturated double bonds is represented by number of the atoms, the unsaturated monomer having at least two unsaturated double bonds, in which the number of the atoms is 4 or less, and preferably 3 or less, is preferable. Specifically, allyl methacrylate is mentioned. Herein, the unsaturated monomer having at least two unsaturated double bonds can be used alone, or 2 or more of the unsaturated monomers having at least two unsaturated double bonds can be used as a mixture.

A monomer weight ratio of the above-mentioned core-monomer mixture/the above-mentioned shell-monomer mixture [core portion/shell portion] is preferably within a range of from 50/50 to 98/2, and more preferably within a range

of from 65/35 to 95/5. When the ratio is smaller than 50/50, the stability of the emulsion is lowered. When the ratio is larger than 98/2, there is a fear that the water resistance of the resulting coating film is lowered.

Herein, the acid value and the hydroxyl value of the core portion obtainable by the emulsion polymerization of the above-mentioned core-monomer mixture, the acid value and the hydroxyl value of the shell portion obtainable by the emulsion polymerization of the above-mentioned shell-monomer mixture, as well as, Tg of the above-mentioned core-shell type acrylic resin emulsion are calculated values determined by the content of the unsaturated monomer(s) in the above-mentioned core-monomer mixture and/or the content of the unsaturated monomer(s) in the above-mentioned shell-monomer mixture.

The emulsion polymerization in order to produce the above-mentioned acrylic resin emulsion can be carried out by using a conventional method well known to those skilled in the art. Specifically, it can be carried out by dissolving an emulsifying agent in an aqueous medium containing water, and if necessary, an organic solvent such as an alcohol, and then stirring the mixture with heating, and adding dropwise the above-mentioned core-monomer mixture or the above-mentioned shell-monomer mixture and a polymerization initiator. The above-mentioned core-monomer mixture or the above-mentioned shell-monomer mixture, which has been previously emulsified with the emulsifying agent, and water may be added dropwise as well.

The above-mentioned polymerization initiator preferably includes azo-base oily compounds (e.g., azobis(isobutyronitrile), 2,2'-azobis(2-methylbutyronitrile), 2,2'-azobis(2,4-dimethylvaleronitrile), and the like); and water-borne compounds (e.g., anion-base 4,4'-azobis(4-cyanovaleric acid), and cation-base 2,2'-azobis(2-methylpropionamidine)); and redox-base oily peroxides (e.g., benzoyl peroxide, para-chlorobenzoyl peroxide, lauroyl peroxide, t-butyl perbenzoate, and the like); and water-borne peroxides (e.g., potassium persulfate, ammonium peroxide, and the like), etc.

The above-mentioned emulsifying agent includes an emulsifying agent well known to those skilled in the art. In particular, a reactive emulsifying agent such as Antox MS-60 (produced by Nippon Nyukazai Co., Ltd.), ELEMINOL JS-2 (produced by Sanyo Chemical Industries Ltd.), ADEKAREA SOAP NE-20 (produced by ADEKA Corporation) and AQUARON HS-10 (produced by Daiichi Kogyo Seiyaku Co., Ltd.) or the like is preferable.

If necessary, a chain transfer agent (e.g., mercaptan such as lauryl mercaptan, $\alpha$-methylstyrene dimer, or the like) may be used in order to control the molecular weight.

The reaction temperature may be determined depending on the polymerization initiator. For example, for the azo-base initiator, it is preferably within a range of from 60 to 90°C, and for the redox initiator, it is preferably within a range of from 30 to 70°C. Generally, the reaction time is within a range of from 1 to 8 hours. The content of the polymerization initiator is generally within a range of from 0.1 to 5% by weight, and preferably within a range of from 0.2 to 2% by weight, relative to the total weight of the above-mentioned core-monomer mixture and the above-mentioned shell-monomer mixture.

The above-mentioned acrylic resin emulsion, if necessary, may be neutralized with a base, and used at pH within a range of from 3 to 10. The reason is that the stability in the above pH range is high. The neutralization is preferably carried out by adding a tertiary amine, such as dimethylethanolamine and triethylamine, to the reaction system, before or after the emulsion polymerization.

The content of the above-mentioned acrylic resin emulsion in the above-mentioned water-borne metallic color coating composition is preferably within a range of from 5 to 95% by weight, more preferably within a range of from 10 to 85% by weight, and further preferably within a range of from 20 to 70% by weight, relative to the weight of the solid content in the coating composition. When the content is deviated from the above-defined range, there is a fear that the coating workability and the appearance of the resulting coating film are deteriorated.

*Curing agent*

The curing agent employed in the production method according to the present invention is an aqueous dispersion of a hydrophobic melamine resin having a particle size within a range of from 20 to 140 nm. The aqueous dispersion of the hydrophobic melamine resin is a dispersion wherein the resin particles are dispersed in water, each of which has a particle size within a range of from 20 to 140 nm, and which are obtainable by a reaction of a specific acrylic resin with a hydrophobic melamine resin. Since such aqueous dispersion of the hydrophobic melamine resin is employed, a coating film having a superior color property can be obtained.

When the above-mentioned aqueous dispersion of the hydrophobic melamine resin is used, the multilayered coating film having a superior recoat adhesion, a superior chipping resistance and a superior water-resistant adhesion can be provided. When the particle size is less than 20 nm, the solid content of the coating composition is remarkably lowered. When the particle size exceeds 140 nm, the water dispersibility is decreased, and therefore, there is a fear that the adherence property and the surface smoothness of the resulting coating film are decreased. The particle size is preferably within a range of from 30 to 120 nm, and more preferably within a range of from 50 to 100 nm. Herein, the above-mentioned particle size is a value measured by the similar method to that described in the particle size of the above-mentioned acrylic resin emulsion.

The above-mentioned aqueous dispersion of the hydrophobic melamine resin is preferably a dispersion obtainable by a production method including steps of:

Step (1) of mixing and reacting an acrylic resin having an acid value within a range of from 105 to 200 mgKOH/g (as a basis of the solid resin content), a hydroxyl value within a range of from 100 to 200 mgKOH/g (as a basis of the solid resin content), and a number average molecular weight within a range of from 1000 to 5000, and a hydrophobic melamine resin, in a weight ratio within a range of from 5/95 to 50/50 (acrylic resin/hydrophobic melamine resin), and
Step (2) of dispersing the resulting reaction product in the step (1) into water.

Thereby, the color property, recoat adhesion, chipping resistance and water-resistant adhesion of the resulting coating film can be improved.
Firstly, according to the above-described step (1), an acrylic resin having the acid value within a range of from 105 to 200 mgKOH/g(as a basis of the solidresin content), a hydroxyl value within a range of from 100 to 200 mgKOH/g (as a basis of the solidresin content), and a number average molecular weight within a range of from 1000 to 5000, and a hydrophobic melamine resin are mixed and reacted in a weight ratio within a range of from 5/95 to 50/50 (acrylic resin/hydrophobic melamine resin). The step (1) can provide a reaction product of the above-mentioned acrylic resin with the above-mentioned hydrophobic melamine resin.
The above-mentioned acrylic resin has an acid value within a range of from 105 to 200 mgKOH/g (as a basis of the solid resin content). When it is less than 105 mgKOH/g, there is a fear that the particle size exceeds 140 nm. When it exceeds 200 mgKOH/g, there is a fear that the reaction control is remarkably difficult. It is preferably within a range of from 105 to 180 mgKOH/g.
The above-mentioned acrylic resin has a hydroxyl value within a range of from 100 to 200 mgKOH/g. When it is less than 100 mgKOH/g, there is a fear that the particle size exceeds 140 nm. When it exceeds 200 mgKOH/g, there is a fear that the reaction control is remarkably difficult. It is preferably within a range of from 120 to 180 mgKOH/g.
The above-mentioned acrylic resin has a number average molecular weight within a range of from 1000 to 5000. When it is less than 1000, there is a fear that the particle size exceeds 140 nm. When it exceeds 5000, there is a fear that the reaction control is remarkably difficult. It is preferably within a range of from 1500 to 4000.
Herein, the number average molecular weight (Mw) can be measured by a gel permeation chromatography (GPC) with polystyrene having a known molecular weight as a standard. For example, the number average molecular weight can be measured with a GPC apparatus [Model HLC-8120 GPC manufactured by Tosoh Corporation, wherein two columns (Model Super H-4000 manufactured by Tosoh Corporation) and one column (Model Super H-3000) are in-line connected], a differential refractometry detector, and a data processing machine (Model SC-8020 manufactured by Tosoh Corporation) under these conditions:

Column temperature: 40˚C,
Eluent: THF (in a reagent grade 1, produced by Katayama Chemical Industry Co., Ltd.),
Flow rate: 0.5 mL/min,
Sample concentration: 1% by weight, and
Charge amount of sample solution: 10 $\mu$L.

The above-mentioned hydrophobic melamine resin includes those conventionally known to those skilled in the art. The preferable hydrophobic melamine resin has a solubility parameter (SP) $\delta$ within a range of $9.0 \leq SP \leq 11.5$. When SP value is less than 9.0, there is a fear that a particle size exceeds 140 nm. When SP value exceeds 11.5, there is a fear that the particle size exceeds 140 nm and that the properties of the resulting coating film such as water resistance are decreased. The SP value is more preferably within a range of $9.5 < SP < 11.0$.
The above-mentioned solubility parameter ($\delta$) is also generally so-called as SP (solubility parameter) by those skilled in the art. The SP is an index of a hydrophilicity or a hydrophobicity of a resin. The SP is also an important index for considering compatibility between resins. The solubility parameter can be determined i.e., quantified, for example, according to a measurement such as a turbidity titrating method (see reference: K.W., Suh, D. H. Clarke, J. Polymer. Sci., A-1, 5, 1671 (1967)). The solubility parameter ($\delta$) in the present specification is a parameter determined according to a turbidity titrating method. The solubility parameter can be determined by a turbidity titrating method and a known calculation method described in the above-listed reference, etc. For example, the titrating method includes dissolving a solid resin content (in a given weight), as a measurement object, in a given amount of a good solvent (e.g., acetone), and then adding dropwise a poor solvent (e.g., water or hexane) thereto. At the point that the resin is insolubilized and the turbidity in the solution is observed, and the titration amount of the good solvent and the titration amount of the poor solvent are subjected to the calculation.
In the step (1), the mixing ratio of the above-mentioned acrylic resin and the above-mentioned hydrophobic

melamine resin is preferably within a range of from 5/95 to 50/50 (in a weight ratio, acrylic resin/hydrophobic melamine resin). When the weight ratio is less than 5/95, there is a fear that the particle size exceeds 140 nm. When the weight ratio exceeds 50/50, there is a fear that the NV (i.e., solid content concentration) in the coating composition is remarkably lowered and that the reaction control is remarkably difficult. It is further preferably within a range of from 10/90 to 40/60. Herein, the mixing method of the acrylic resin and the hydrophobic melamine resin can be carried out by a conventionally known method.

According to the present invention, the amount of the acrylic resin to the hydrophobic melamine resin is low in the step (1). Therefore, in the case that the resulting aqueous dispersion of the hydrophobic melamine resin is used as a curing agent, the function as a curing agent is hardly lowered. In addition, nevertheless the amount of the acrylic resin is small, the particle size after water-dispersing is within a range of from 20 to 140 nm. Consequently, the resulting aqueous dispersion of the hydrophobic melamine resin according to the present invention can be preferably employed as a curing agent in the water-borne metallic color coating composition.

Furthermore, in the step (1), the other resin such as a polyester resin may be contained in addition to the above-mentioned acrylic resin and the above-mentioned hydrophobic melamine resin to an extent not adversely effecting on the improvements provided by the present invention.

In the step (1), the conditions for the reaction of the above-mentioned acrylic resin with the above-mentioned hydrophobic melamine resin are as follows. The reaction temperature is preferably within a range of from 70 to 100˚C, and more preferably within a range of from 75 to 90˚C. In addition, the reaction time is preferably within a range of from 1 to 10 hours, and more preferably within a range of from 1 to 5 hours. When it is less than the lower limit, there is a fear that the particle size exceeds 140 nm. When it exceeds the upper limit, there is a fear that the reaction control is remarkably difficult.

The step (2) includes a step of dispersing the resulting reaction product from the step (1) into water to provide an aqueous dispersion of a hydrophobic melamine resin having a particle size within a range of from 20 to 140 nm. The step (2) can provide an aqueous dispersion (or a water-dispersion) in which resin particles having particle size within a range of from 20 to 140 nm are dispersed in water.

In the step (2), the method for dispersing the resulting reaction product from the step (1) into water includes, but is not specifically limited to, a conventional method for dispersing a resin into water. It is preferable that the above-mentioned reaction product is cooled to a temperature of 50˚C or less, and then water for dilution is added to provide an aqueous dispersion. Accordingly, the aqueous dispersion of the hydrophobic melamine resin having a particle size within a range of from 20 to 140 nm can be preferably prepared. When it is not cooled at 50˚C or less, there is a fear that the aqueous dispersion of the hydrophobic melamine resin having a particle size within a range of from 20 to 140 nm cannot be obtained. It is more preferable that aqueous dispersion is prepared by adding water for dilution after cooling to 30 to 40˚C.

If necessary, the aqueous dispersion of the hydrophobic melamine resin may be neutralized with a base in the step (2), and the aqueous dispersion can be used at a pH within a range of from 6.5 to 10. The reason is that the stability in this pH range is high. It is preferable that the neutralization is carried out by adding a tertiary amine (e.g., dimethylethanolamine, triethylamine) into the reaction system before or after the reaction of the above-mentioned acrylic resin with the above-mentioned hydrophobic melamine resin. Among others, it is particularly preferable that the tertiary amine is added after the reaction of the above-mentioned acrylic resin with the above-mentioned hydrophobic melamine resin, and then the aqueous dispersion is obtained by the addition of water for dilution after cooling the reaction product to the temperature of 50˚C or less. Thereby, the aqueous dispersion of the hydrophobic melamine resin having a particle size within a range of from 20 to 140 nm can be preferably obtained.

*Polyoxyalkylene compound*

According to the present invention, the coating composition may comprise, if necessary, 0.01 to 10% by weight of a polyoxyalkylene compound having the formula (1):

$$H(-OR)_f\text{-}OH \qquad (1)$$

wherein

R is an alkyl group having 2 to 5 carbon atoms, which may have a branched chain, and

f is an integer of 100 to 18000,

relative to the weight of the solid resin content in the coating composition.

The polyoxyalkylene compound preferably has a weight average molecular weight within a range of from 10000 to 1000000, and particularly preferably within a range of from 30000 to 500000. The polyoxyalkylene compound has a higher molecular weight, in particular, a molecular weight exceeding 10000, which can prevent the disturbance of the orientation of the luster color pigment upon applying a clear coating composition. When the molecular weight is less

than 10000, the present technical effect or the prevention of the disturbance of the orientation of the luster color pigment is inadequate. On the other hand, when the weight average molecular weight exceeds 1000000, the non-volatile content of the coating composition is lowered, and therefore the coating performance is deteriorated. In the above-represented formula (1), R is an ethylene group, a propylene group, a butylene group or a pentylene group, which may have a branched chain, preferably an ethylene group or a propylene group, more preferably an ethylene group. When R is an ethylene group, the polyoxyalkylene compound is a polyoxyethylene compound most preferably having a weight average molecular weight within a range of from 10000 to 1000000.

The content of the polyoxyalkylene compound is within a range of from 0.01 to 10% by weight, and preferably within a range of from 0.5 to 5.0% by weight, relative to the weight of the solid resin content in the water-borne metallic color coating composition according to the present invention. When it is less than 0.01% by weight, the effect provided by the addition of the polyoxyalkylene compound is not obtained. When it exceeds 10% by weight, the non-volatile content of the coating composition is lowered, and therefore the coating performance is deteriorated.

*Viscosity improving agent*

The water-borne metallic color coating composition according to the present invention may comprise a viscosity improving agent, if necessary. The viscosity improving agent to be employed is preferably a mixture of an urethane compound (A) represented by the general formula (1):

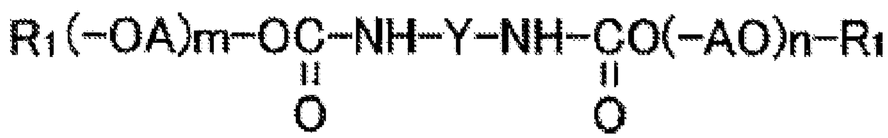
(1)

,

and a urethane compound (B) represented by the general formula (2) :

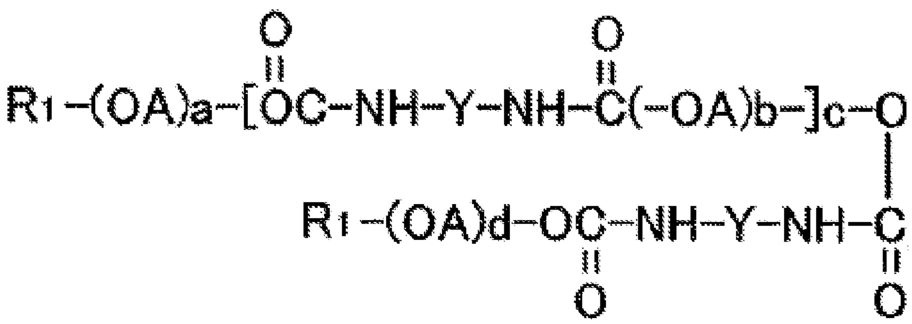
(2)

wherein
$R_1$ is the same or different and represents an alkyl group having 8 to 24 carbon atoms,
Y represents a reactive residual group resulted from elimination of an isocyanate group from a diisocyanate,
OA and AO independently represent an oxyalkylene group having 2 to 4 carbon atoms,
O represents an oxygen atom,
C represents a carbon atom,
N represents a nitrogen atom,
m and n independently represent an integer of 20 to 500,
a and d independently represent an integer of 1 to 100,
b represents an integer of 40 to 500,
c represents an integer of 1 to 5,
(b x c) is 150 to 2500,
f represents an integer of 200 to 25000, and
R, Y and P may be independently the same or different, wherein each urethane compound has at least 80% by weight of oxyethylene group(s) relative to the total weight of oxyalkylene group(s).

The example of the alkyl group having 8 to 24 carbon atoms ($R_1$) includes a linear alkyl, such as n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, n-eicosyl, n-heneicosyl, n-docosyl, and the like; a branched alkyl, such as 2-ethylhexyl, isodecyl, isotridecyl, isostearyl, and the like; a linear alkenyl, such as n-octenyl, n-decenyl, n-undecenyl, n-dodecenyl, n-tridecenyl, n-tetradecenyl, n-pentadecenyl, n-hexadecenyl, n-heptadecenyl, n-octadecenyl, and the like; and a branched alkenyl, such as isooctenyl, isodecenyl, isoundecenyl, isododecenyl, isotridecenyl, isotetradecenyl, isopentadecenyl, isohexadecenyl, isoheptadecenyl, isooctadecenyl, and the like; etc. Among these, the linear alkyl and the linear alkenyl are preferable from the aspects of the finishing property, and the like. The linear alkyl is more preferable. n-Hexadecyl, n-heptadecyl, n-octadecyl, n-nonadecyl, n-eicosyl, n-heneicosyl and n-docosyl are particularly preferable.

The diisocyanate for the reactive residual group (Y) resulted from elimination of an isocyanate group from the diisocyanate includes aliphatic diisocyanate, aromatic diisocyanate, alicyclic diisocyanate, and the like.

The example of the aliphatic diisocyanate includes an aliphatic diisocyanate having 3 to 15 carbon atoms, such as methylene diisocyanate, dimethylene diisocyanate, trimethylene diisocyanate, tetramethylene diisocyanate, pentamethylene diisocyanate, hexamethylene diisocyanate, heptamethylene diisocyanate, octamethylene diisocyanate, nonamethylene diisocyanate, decamethylene diisocyanate, bis(isocyanatopropyl) ether, 1,1-dimethylbutane-1,4-diisocyanate, 3-methoxyhexane-1,6-diisocyanate, 2,2,4-trimethylpentane-1,5-diisocyanate, 3-butoxy-1,6-hexane diisocyanate, 1,4-butylene glycol bis(isocyanatopropyl) ether, etc.

The aromatic diisocyanate includes an aromatic diisocyanate having 8 to 20 carbon atoms, suchas meta-phenylene diisocyanate, para-phenylene diisocyanate, 2,4-tolylene diisocyanate, 2,6-tolylene diisocyanate, dimethylbenzene diisocyanate, ethylbenzene diisocyanate, isopropylbenzene diisocyanate, biphenyl diisocyanate, 4,4'-diisocyanato-2,2'-dimethylbiphenyl, 4,4'-diisocyanato-3,3'-dimethoxybiphenyl, 1,5-diisocyanate naphthalene, 4,4'-diisocyanatodiphenylmethane-4,4'-diisocyanato-2,2'-dimethyldiphenylmethane, 4,4'-diisocyanato-3,3'-dimethoxydiphenylmethane, 3,3'-diisocyanato-4,4'-dimethoxydiphenylmethane, 3,3'-diisocyanato-4,4'-diethoxydiphenylmethane, 4,4'-diisocyanato-2,2'-dimethyl-5,5'-dimethoxydiphenylmethane, meta-xylylene diisocyanate, para-xylylene diisocyanate, tetramethylxylylene diisocyanate, etc.

The alicyclic diisocyanate includes an alicyclic diisocyanate having 8 to 20 carbon atoms, such as 1,3-diisocyanatocyclohexane, 1,3-bis(isocyanatomethyl)cyclohexane, 1-isocyanato-3-isocyanatomethyl-3,5,5-trimethylcyclohexane, 4,4'-diisocyanatodicyclohexylmethane, etc.

Among these diisocyanates, the aliphatic diisocyanate and the alicyclic diisocyanate are preferable. The aliphatic diisocyanate is more preferable. Hexamethylene diisocyanate and octamethylene diisocyanate are particularly preferable.

The oxyalkylene group (OA, AO) having 2 to 4 carbon atoms includes oxyethylene, oxypropylene and oxybutylene. The oxyalkylene group may be in a combination of them. In case of the combination, the combined embodiment includes a block form, a random form, and a combination of a block form and a random form. The block form and a combination of a block form and a random form are preferable. The block form is more preferable.

Each of the compounds represented by the general formulae (1) and (2) necessary comprises an oxyethylene group(s). Each compound has the oxyethylene group(s) preferably at least 80% by weight, more preferably 85% by weight or more, and particularly preferably 90% by weight or more, relative to the total weight of the oxyalkylene group (s). When the content (in % by weight) is within the range, the finishing property is further improved.

m and n are independently an integer of 20 to 500, preferably an integer of 30 to 300, and more preferably an integer of 40 to 200. When m and n are independently within the range, the finishing property is further improved.

a and d are independently an integer of 1 to 100, preferably an integer of 2 to 70, and more preferably an integer of 3 to 40. When a and d are independently within the range, the finishing property is further improved.

b is an integer of 40 to 500, preferably an integer of 55 to 400, and more preferably an integer of 70 to 300. When b is within the range, the finishing property is further improved.

c is an integer of 1 to 5, preferably an integer of 1 to 4, and more preferablyan integer of 1 to 3. When c is within the range, the finishing property is further improved.

(b x c) is 150 to 2500, preferably 200 to 2000, and more preferably 250 to 1500. When (b x c) is within the range, the finishing property is further improved.

f is an integer of 200 to 25000, preferably an integer of 400 to 20000, and more preferablyan integer of 600 to 15000. When f is within the range, the finishing property is further improved.

The urethane compound (A) represented by the general formula (1) may be a mixture, since the components in the urethane compound (A) such as $(-OA)_m$ and $(-AO)_n$ usually have a distribution. In case of the mixture, the weight average molecular weight of the urethane compound (A) represented by the general formula (1) is preferably within a range of from 5000 to 20000, and more preferably within a range of from 7000 to 15000. When the weight average molecular weight is within the range, the finishing property is further improved. When the molecular weight of the above-mentioned compound (A) is less than 5000, the finished texture of the resulting coating film is deteriorated. When it exceeds 20000, the solid content of the resulting coating composition is less than 24% by weight wherein the coating

composition has been diluted so that the viscosity determined by a No.4 Ford cup (at 20°C) is 45 (seconds), and therefore it is not acceptable.

The urethane compound (B) represented by the general formula (2) may be a mixture, since the components in the urethane compound (B) such as $(-OA)_a$, $(-OA)_b$, $(-OA)_d$ and $[OC(O)-NH-Y-NH-C(O)-(OA)_b-]_c$ usually have a distribution. In case of the mixture, the weight average molecular weight of the urethane compound (B) represented by the general formula (2) is preferably within a range of from 20000 to 100000, and more preferably within a range of from 20000 to 60000. The weight average molecular weight is within the range, the finishing property is further improved. When the molecular weight of the above-mentioned compound (B) is less than 20000, the FF property of the resulting coating film is less than 3.80 and the appearance of the coating film has problems. On the other hand, when it exceeds 100000, the solid content of the resulting coating composition is less than 24% by weight wherein the coating composition has been diluted so that the viscosity determined by a No.4 Ford cup (at 20°C) is 45 (seconds), and therefore it is not acceptable.

Herein, the weight average molecular weight can be measured by a GPC method in the similar mannerto that described in the measurement method for the number average molecular weight of the above-mentioned acrylic resin.

The urethane compound (A) represented by the general formula (1) and the urethane compound (B) represented by the general formula (2) can be produced by using a known urethanation reaction (e.g., Japanese Patent Application Publication No.2000-303006). For example, the urethane compound (A) can be synthesized by a reaction of a polyether monool with a diisocyanate for 2 to 10 hours. On the other hand, the urethane compound (B) can be synthesized by a reaction of a polyether monool and a polyether diol with a diisocyanate for 2 to 10 hours. Although any by-products may be formed during the reaction, the reaction mixture containing the by-products can be used as it is.

Content of the urethane compound (A) is required to be within a range of from 5 to 95% by weight, preferably within a range of from 10 to 80% by weight, more preferably within a range of from 20 to 70% by weight, and particularly preferably within a range of from 25 to 65% by weight, relative to the total weight of the urethane compound (A) and the urethane compound (B). When the content is within the range, the finishing property is further improved.

Content of the urethane compound (B) is required to be within a range of from 5 to 95% by weight, preferably within a range of from 10 to 80% by weight, more preferably within a range of from 15 to 60% by weight, and particularly preferably within a range of from 17 to 40% by weight, relative to the total weight of the urethane compound (A) and the urethane compound (B). When the content is within the range, the finishing property is further improved.

When the amount of the urethane compound (A) is larger, the finished texture is poorer. On the other hand, when the amount of the urethane compound (B) is larger, the solid content of the resulting coating composition is less than 24% by weight

wherein the coating composition has been diluted so that the viscosity determined by a No.4 Ford cup (at 20°C) is 45 (seconds), and therefore it is not acceptable.

A homogeneous mixing of the urethane compound (A) and the urethane compound (B) can provide a viscosity improving agent to be employed in the water-borne metallic color coating composition according to the present invention. The method for the homogeneous mixing includes a conventional method wherein the mixing is preferably carried out at about 70 to 150°C from the aspect of the mixing efficiency, and the like.

The viscosity improving agent according to the present invention, if necessary, may comprise an organic solvent and water. The organic solvent includes, but is not specifically limited to, for example, isobutyl alcohol, butyl cellosolve, butyl carbitol, isopropanol, and the like. The total content of the organic solvent and water is within a range of from 10 to 99% by weight based on the total weight of the composition.

The content of the viscosity improving agent according to the present invention is preferably within a range of from 0.2 to 4.0% by weight, more preferably within a range of from 0.5 to 3.0% by weight, relative to the solid resin content in the water-borne metallic color coating composition. The viscosity of the water-borne metallic color coating composition is further improved when the content is within the range.

*Luster color pigment*

The luster color pigment comprised in the water-borne metallic color coating composition according to the present invention includes, but is not specifically limited to, on the shape, for example, the luster color pigment preferably having an average particle size (D50) within a range of from 2 to 50 μm and a thickness within a range of from 0.1 to 5 μm, which may be colored. Furthermore, the luster color pigment having an average particle size within a range of from 10 to 35 μm is superior in the luster color, and more preferable and applicable. Specifically, the luster color pigment includes a non-colored or colored luster color pigment made of a metal such as aluminum, copper, zinc, iron, nickel, tin and aluminum oxide, or an alloy thereof, and mixture thereof, etc. Additionally, the luster color pigment includes an interference mica pigment, a white mica pigment, a graphite pigment, and the like.

The water-borne metallic color coating composition according to the present invention may further comprise a coloring pigment, if necessary. The coloring pigment includes, for example, an organic coloring pigment, such as an

azo chelate pigment, an insoluble azo pigment, a fused azo pigment, a phthalocyanine pigment, a diketopyrrolopyrrole pigment, a benzimidazolone pigment, an indigo pigment, a perinone pigment, a perylene pigment, a dioxane pigment, a quinacridone pigment, an isoindolinone pigment, a metal complex pigment, ard the like; an inorganic coloring pigment, such as chrome yellow, yellow iron oxide, colcothar, barium sulfate, carbon black, titanium dioxide, and the like.

Herein, it is preferable that the pigment weight concentration (PWC) of the luster color pigment is generally 18.0% or less. When it exceeds the upper limit, there is a fear that the appearance of the coating film is deteriorated. It is more preferably within a range of from 0.01 to 15.0%, and particularly preferably within a range of from 0.01 to 13.0%. Herein, the pigment weight concentration (PWC) is a value calculated by the formula:

(weight of pigment)/(weight of solid resin content in coating composition) x 100.

The total pigment weight concentration (PWC) in the water-borne metallic color coating composition is preferably within a range of from 0.1 to 50%. It is further preferably within a range of from 0.5 to 40%, and particularly preferably within a range of from 1.0 to 30%. When it exceeds the upper limit, there is a fear that the appearance of the coating film is deteriorated.

The water-borne metallic color coating composition may comprise otherfilm forming resin, if necessary. The other film forming resin includes, but is not specifically limited to, a film forming resin, such as an acrylic resin other than the above-mentioned acrylic resin emulsion, a polyester resin, an alkyd resin, an epoxy resin and a urethane resin.

Herein, the number average molecular weight of the other film forming resin is within a range of from 3000 to 50000, and preferably within a range of from 6000 to 30000. When it is less than 3000, the workability and the curing property are not adequate. When it exceeds 50000, the non-volatile content during the coating procedure is too low, and therefore, adversely, there is a fear that the workability is decreased.

The other film forming resin has an acid value preferably within a rage of from 10 to 100 mgKOH/g, and more preferably within a range of from 20 to 80 mgKOH/g (as a basis of the solid resin content). When it exceeds the upper limit, the water resistance of the resulting coating film is decreased. When it is less than the lower limit, there is a fear that the water dispersibility of the resin is decreased. Furthermore, the other film forming resin has preferably a hydroxyl value preferably within a range of from 20 to 180 mgKOH/g, and more preferably within a range of from 30 to 160 mgKOH/g. When it exceeds the upper limit, the water resistance of the resulting coating film is decreased. When it is less than the lower limit, there is a fear that the curing property of the coating film is decreased.

With respect to the proportion of the acrylic resin emulsion to the other film forming resin in the water-borne metallic color coating composition, the content of the acrylic resin emulsion is within a range of from 5 to 95% by weight, preferably within a range of from 10 to 85% by weight, and more preferably within a range of from 20 to 70% by weight, relative to the total weight of the solid resin contents; and the content of the other film forming resin is within a range of from 95 to 5% by weight, preferably within a range of from 90 to 15% by weight, and more preferably within a range of from 80 to 30% by weight, relative to the total weight of the solid resin content. When the content of the acrylic resin emulsion is less than 5% by weight, the workability is decreased. When it exceeds 95% by weight, there is a fear that the film formation is deteriorated.

As the other film forming resin, a water-soluble acrylic resin is preferably used from the aspect of the compatibility with the acrylic resin emulsion. The water-soluble acrylic resin can be prepared by carrying out a solution polymerization of the above-described carboxylic acid group-containing unsaturated monomer, as an essential component, with other ethylenically unsaturated monomer.

Herein, the water-soluble acrylic resin to be used is usually neutralized with a basic compound, for example, an organic amine such as monomethylamine, dimethylamine, trimethylamine, triethylamine, diisopropylamine, monoethanolamine, diethanolamine and dimethylethanolamine, and then dissolved in water. The water-soluble acrylic resin itself may be neutralized. Alternatively, the neutralization may be carried out during the production of the water-borne metallic color coating composition.

Herein, the water-borne metallic color coating composition may further comprise a polyether polyol. The addition of the polyether polyol can provide a coating film having further improved properties. The polyether polyol includes a polyether polyol preferably having at least one primary hydroxyl group in the molecule, a number average molecular weight within a range of from 300 to 3000, a hydroxyl value within a range of from 30 to 700 mgKOH/g, and water tolerance of 2.0 or more. When it does not meet the above-mentioned conditions, the water resistance is occasionally lowered, and the objective improvement for the appearance is not occasionally obtained.

Such polyether polyol includes a compound in which an alkylene oxide such as propylene oxide is added to an active hydrogen-containing compound, such as a polyalcohol, a polyphenol and a polycarboxylic acid. The specific

example includes a commercially available product such as PRIMEPOLE PX-1000, SANNIX SP-750 (both of the above-described products are manufactured by Sanyo Chemical Industries Ltd.) and PTMG-650 (manufactured by Mitsubishi Chemical Corporation). The content of the polyether polyol is preferably within a range of from 1 to 40% by weight, and more preferably within a range of from 3 to 30% by weight, relative to the weight of the solid resin content in the coating composition.

The water-borne metallic color coating composition may further include other curing agent to some extent so that the other curing agent does not adversely effect on the cure according to the present invention. The other curing agent includes a conventional curing agent used for the coating composition other than the above-described aqueous dispersion of the hydrophobic melamine resin, such as block isocyanate, an epoxy compound, an aziridine compound, a carbodiimide compound, an oxazoline compound, a hydrophilic melamine resin, a metal ion, and the like.

The block isocyanate can be obtained by an addition of a blocking agent having an active hydrogen to a polyisocyanate such as trimethylene diisocyanate, hexamethylene diisocyanate, xylylene diisocyanate and isophorone diisocyanate. The block isocyanate includes those in which an isocyanate group is generated by the dissociation of the blocking agent with heating.

When the water-borne metallic color coating composition comprises the above-described curing agent, the content of the curing agent is preferably within a range of from 10 to 100 parts by weight based on 100 parts by weight of the solid resin content in the water-borne metallic color coating composition. When the content is out of the above-defined range, there is a fear that the curing property is insufficient.

Furthermore, the other viscosity-controlling agent can be added into the water-borne metallic color coating composition to prevent the compatibility due to the top coating film, and to secure the coating workability. The viscosity-controlling agent includes a conventional viscosity-controlling agent which can provide a thixotropy, such as crosslinked or non-crosslinked resin particles; polyamide agents, such as the swelled dispersion of fatty acid amide, amide fatty acid, a phosphate of a long chain polyaminoamide, and the like; polyethylene agents, such as the colloidal swelled dispersion of polyethylene oxide, and the like; organic bentonite agents, such as organic acid-smectite clay, montmorillonite, and the like; inorganic pigments, such as aluminum silicate, barium sulfate, and the like; flat pigments expressing viscosity depending on the shape of the pigment, etc.

In addition to the above-mentioned components, the water-borne metallic color coating composition may comprise a conventional additive for a coating composition, such as a surface adjusting agent, a thickener, an antioxidant, an ultraviolet protective agent, a defoaming agent, etc. The content of the additive is within a range knownto those skilled in the art.

The production method for the water-borne metallic color coating composition includes, but is not specifically limited to, those described below as well as all methods well known to those skilled in the art, such as a method including kneading and dispersing these materials containing a pigment by a means of a sand grind mill, a glen mill, a kneader, a roll, or the like.

*Method for forming multilayered coating film*

The water-borne metallic color coating composition can be preferably used as a water-borne metallic base coating composition for an automobile. Therefore, it can be applicable to the method for forming a multilayered coating film that can be applied to the vehicle body such as an automobile, a part thereof, and the like. The method for forming a multilayered coating film includes, for example, a method comprises:

Step (I) of applying a water-borne metallic color coating composition as described above on an article to form a base coating;
Step (II) of applying a clear coating composition on the base coating, without curing the base coating, to form a clear coating; and
Step (III) of simultaneously heating the base coating and the clear coating.

The article to be coated in the method for forming a multilayered coating film includes various substrates, such as a metal molded article, a plastic molded article, a foamed article, and the like. The preferable article is a metal molded article on which a cationic electrodeposition coating can be applied.

The example of the metal molded article includes a plate and molded articles made of a metal such as iron, copper, aluminum, tin and zinc, or an alloy thereof. Specifically, the article includes a vehicle body and a part thereof for automobiles, autotrucks, autobicycles, buses, or the like. It is preferable that the metal is previously chemically treated with phosphate, chromate, or the like.

An electrodeposition coating film can be formed on a metal molded article which has been chemically treated. The electrodeposition coating composition includes cationic type and anionic type electrodeposition coating compositions. The cationic electrodeposition coating composition is preferable from the aspect of the anticorrosion property.

The plastic molded article includes a plate, a molded article, or the like, which is made of a polypropylene resin, a polycarbonate resin, a urethane resin, a polyester resin, a polystyrene resin, an ABS resin, a polyvinyl chloride resin, a polyamide resin, or the like. Specifically, the plastic molded article includes an automobile part such as a spoiler, a bumper, a mirror cover, a grill, a door knob, etc. Herein, the plastic molded article is preferably vapor-rinsed with trichloroethane, or rinsed with a neutral detergent.
Furthermore, a primer coating may be applied thereon to accept an electrostatic coating procedure.

If necessary, an intermediate coating film may be further formed on the article. An intermediate coating composition is used for forming an intermediate coating film. The intermediate coating composition may comprise a film forming resin, a curing agent, an organic or inorganic coloring component, a filler pigment, or the like. The film forming resin and the curing agent include, but are not specifically limited to, specifically, the film forming resin and the curing agent that are previously described in the present water-borne metallic color coating composition. They may be used in a combination.
The combination of the acrylic resin and/or the polyester resin and the amino resin and/or the isocyanate is used from the aspect of the cost and the various performances of the resulting intermediate coating film. The coloring component which may be comprised in the intermediate coating composition includes those previously described in the water-borne metallic color coating composition. In general, it is preferable to use a gray intermediate coating composition which mainly contains carbon black and titanium dioxide, a set gray intermediate coating composition providing a coating film matched with the color of the overcoatings, and a so-called color intermediate coating composition with a combination of coloring components. The intermediate coating composition may further include a flat pigment such as aluminum powder and mica powder.

In addition to the above-mentioned components, the intermediate coating composition may comprise a conventional additive for a coating composition, such as a surface adjusting agent, an antioxidant, a defoaming agent, and the like.

The procedure for applying the water-borne metallic color coating composition on an article includes a multi-stage coating procedure with an air electrostatic spray coating, and preferably two-stage coating procedure, or a coating procedure in a combination of an air electrostatic spray coating procedure and a rotational atomization type electrostatic coating machine so-called as a metallic bell, in order to improve the coating appearance.

Thickness of the coating film resulted from the water-borne metallic color coating composition upon application canbe varied depending on the desired application. Generally, a dried film thickness is preferably within a range of from 10 to 30 μm. When the dried film thickness is less than 10 μm, the article to be coated can not be covered with to generate film deficiencies. When it exceeds 30 μm, the sharpness is decreased, and there is a fear of some troubles such as unevenness and sagging upon application. It is preferable to heat the resulting base coating film, at 40 to 100˚C for 2 to 10 minutes, before application of a clear coating composition, in order to provide a multilayered coating film having a good appearance.

The method for forming a multilayered coating film includes a step of applying a clear coating composition on the base coating resulted from the application of the water-borne metallic color coating composition, without heating or curing the base coating, to form a clear coating. The resulting clear coating film suppresses the unevenness, dazzling, and the like due to the base coating to provide a smooth film, to protect the underlying film, and to provide an excellent appearance.

The clear coating composition includes, but is not specificallylimited to, a clear coating composition comprising a film forming resin, a curing agent, and the like. The clear coating composition may further comprise a coloring component as long as the design of the underlying layer is not disturbed.

The clear coating composition includes any solvent type clear coating compositions, any water-borne type clear coating compositions and any powder type clear coating compositions.

From the aspects such as transparency and acid-resistant etching property, the preferable example of the solvent type clear coating composition includes a combination of an acrylic resin and/or a polyester resin and an amino resin and/or an isocyanate; and an acrylic resin having a curing system of a carboxylic acid/an epoxy, and/or a polyester resin having a curing system of a carboxylic acid/an epoxy; and the like.

Herein, the example of the water-borne type clear coating composition includes a coating composition comprising a resin which is obtainable by a neutralization of a film forming resin, which is comprised in that described as the example of the solvent type clear coating composition, with a base to be solubilized in water. The neutralization can be carried out by adding a tertiary amine, such as dimethylethanolamine and triethylamine, before or after the polymerization.

Furthermore, the clear coating composition preferably comprises a viscosity controlling agent in order to secure the coating workability. In general, the viscosity controlling agent includes a viscosity controlling agent having thixotropy Such viscosity controlling agent includes, for example, a conventionally known viscosity controlling agent. If necessary, the viscosity controlling agent may further comprise a curing catalyst, a surface adjusting agent, or the like.

Herein, from the aspect of the influence of the organic solvent inclusion to the environment, the clear coating composition employed in the method for forming a multilayered coating film includes a solvent type clear coating composition or a water-borne type clear coating composition, which has a preferable solid content of 50% by weight or more relative to the weight of the clear coating composition, which has been diluted so that the viscosity determined by a No. 4 Ford cup (at 20˚C) is 20 to 50 (seconds). The powder type clear coating composition is also preferable as well.

Specifically, the procedure for applying the clear coating composition on the base coating includesan application procedure with a rotational atomization type electrostatic coating machine so-called as a micro-microbell or a microbell.

On the other hand, the powder type clear coating composition includes usual powder coating compositions, such as a thermoplastic powder coating composition, and a thermosetting powder coating composition. The thermosetting powder coating composition is preferable because the resulting coating film has good physical properties. The specific example of the thermosetting powder coating composition includes an epoxy powder clear coating composition, an acryl powder clear coating composition, a polyester powder clear coating composition, and the like. The acrylic powder clear coating composition is particularly preferable to provide a film having a good weather resistance.

Generally, the dried film thickness of the clear coating film formed by the application of the clear coating composition is preferably within a range of from 10 to 80 μm, and more preferably within a range of from 20 to 60μm. When the dried film thickness is less than 10 μm, the unevenness due to the base coating cannot be covered. When it exceeds 80 μm, there is a fear of some troubles such as popping or sagging of the coating composition during the coating.

Simultaneously heating thus formed clear coating together with the previously formed base coating can provide a cured coating film. The heating temperature for the curing is preferably within a range of from 80 to 180˚C, and more preferably within a range of from 120 to 160˚C, from the aspects of the curing property and the physical properties of the resulting multilayered coating film. The heating time for the curing can be appropriately determined depending on the temperature. It is suitable that the heating temperature for the curing is within a range of from 120˚C to 160˚C, and the heating time for the curing is within a range of from 10 to 30 minutes.

The thickness of thus prepared multilayered coating film is generally within a range of from 30 to 300 μm, and preferably within a range of from 50 to 250 μm. When the film thickness is less than 30 μm, the strength of the film itself is decreased. When it exceeds 300 μm, there is a fear that the physical properties of the film after a thermal cycle test are decreased. The present invention further encompasses thus prepared multilayered coating film.

The above-described method for forming a multilayered coating film can provide a multilayered coating film on an article, which has an extreme brilliant luster color and acolor property, and a recoat adhesion, a chipping resistance and a water-resistant adhesion.

The water-borne metallic color coating composition according to the present invention comprises the film forming resin comprising a specific acrylic resin emulsion; the curing agent comprising the aqueous dispersion of the hydrophobic melamine resin having a particle size within a range of from 20 to 140 nm, wherein a specific acrylic resin and a specific hydrophobic melamine resin are mixed and reacted in a given proportion to give a reaction product, and then the reaction product is dispersed into waterto give the aqueous dispersion; and a color pigment. Therefore, the water-borne metallic color coating composition according to the present invention can provide a coating film having a superior color property. Furthermore, the water-borne metallic color coating composition is applicable to the automobile coating procedures, as a water-borne base coating composition suitable for the method for forming a multilayered coating film. The water-borne metallic color coating composition can provide a multilayered coating film having a superior recoat adhesion, a superior chipping resistance and a superior water-resistant adhesion. Accordingly, the water-borne metallic color coating composition according to the present invention can be preferably used as a water-borne base coating composition.

## EXAMPLES

Hereinafter, the present invention is further described referring to the following Examples in detail. The present invention is not limited to the Examples. Herein, the "part (s) " and "%" mean "part (s) by weight" and "% by weight" respectively, unless otherwise noticed.

*Production Example A1: Production of acrylic resin emulsion Em-A1*

Into a reaction vessel, 135.400 parts of ion-exchanged water and 1.100 parts of AQUARON HS-10 (polyoxyethylenealkylpropenyl phenyl ether sulfate; produced by Dai-ichi Kogyo Seiyaku Co., Ltd.) were added, and the temperature was raised to 80˚C while mixing the mixture with stirring under a nitrogen flow. Then, an (α,β-ethylenically unsaturated monomer mixture containing 35.730 parts of methyl acrylate, 8.570 parts of butyl methacrylate, 5.700 parts of 2-hydroxyethyl methacrylate, 20.000 parts of styrene, 0.500 part of AQUARON HS-10, 0.500 part of ADEKA REASOAP NE-20 (α-[1-[(allyloxy)methyl]-2-nonylphenoxy]ethyl)-ω-hydroxyoxyethylene; produced by ADEKA CORPORATION, 80% aqueous solution) and 49.700 parts of ion-exchanged water, for the first stage, and an initiator solution containing 0.210 part of ammonium persulfate and 8.600 parts of ion-exchanged water were simultaneously added dropwise into the reaction vessel over 2 hours respectively. After completion of the dropwise addition, aging was carried out at the

same temperature for 1 hour.

Furthermore, an ethylenically unsaturated monomer mixture containing 25.300 parts of butyl methacrylate, 2.400 parts of 2-hydroxyethyl methacrylate, 2.300 parts of methacrylic acid, 0.100 part of AQUARON HS-10 and 24.700 parts of ion-exchanged water, for the second stage, and an initiator solution containing 0.080 part of ammonium persulfate and 7.400 parts of ion-exchanged water were simultaneously added dropwise into the reaction vessel at 80˚C over 0.5 hour respectively. After completion of the dropwise addition, aging was carried out at the same temperature for 2 hours.

Subsequently, the mixture was cooled to 40˚C and filtered through a 400 mesh filter, and then 2.140 parts of ion-exchanged water and 0.240 part of dimethylaminoethanol were added thereto to adjust pH at 6.5 to give an emulsion resin Em-A1 having an average particle size of 80 nm, a non-volatile content of 30%, an acid value of 15 mgKOH/g (as a basis of the solid content) and a hydroxyl value of 35 mgKOH/g (as a basis of the solid content).

*Production Example A2: Production of acrylic resin emulsion Em -A2*

Into a reaction vessel, 135.400 parts of ion-exchanged water and 1.100 parts of AQUARON HS-10 (polyoxyethylenealkylpropenyl phenyl ether sulfate; produced by Dai-ichi Kogyo Seiyaku Co., Ltd.) were added, and temperature was raised to 80˚C while mixing the mixture with stirring under a nitrogen flow. Then, an ethylenically unsaturated monomer mixture containing 35.695 parts of methyl acrylate, 8.570 parts of butyl methacrylate, 5.700 parts of 2-hydroxyethyl methacrylate, 20.000 parts of styrene, 0.035 part of ethylene glycol dimethacrylate, 0.500 part of AQUARON HS-10, 0.500 part of ADEKA REASOAP NE-20 (α-[1-[(allyloxy)methyl]-2-nonylphenoxy]ethyl)-ω-hydroxyoxyethylene; produced by ADEKA CORPORATION, 80% aqueous solution) and 49.700 parts of ion-exchanged water, for the first stage, and an initiator solution containing 0.210 part of ammonium persulfate and 8.600 parts of ion-exchanged water were simultaneously added dropwise into the reaction vessel over 2 hours respectively. After completion of the dropwise addition, aging was carried out at the same temperature for 1 hour.

Furthermore, an ethylenically unsaturated monomer mixture containing 25.285 parts of butyl methacrylate, 2.400 parts of 2-hydroxyethyl methacrylate, 2.300 parts of methacrylic acid, 0.015 part of ethylene glycol dimethacrylate, 0.100 part of AQUARON HS-10 and 24.700 parts of ion-exchanged water, for the second stage, and an initiator solution containing 0.080 part of ammonium persulfate and 7.400 parts of ion-exchanged water were simultaneously added dropwise into the reaction vessel at 80˚C over 0.5 hour respectively. After completion of the dropwise addition, aging was carried out at the same temperature for 2 hours.

Subsequently, the mixture was cooled to 40˚C and filtered through a 400 mesh filter, and then 2.140 parts of ion-exchanged water and 0.240 part of dimethylaminoethanol were added thereto to adjust pH at 6.5 to give an emulsion resin Em-A2 having an average particle size of 80 nm, a non-volatile content of 30%, an acid value of 15 mgKOH/g (as a basis of the solid content) and a hydroxyl value of 35 mgKOH/g (as a basis of the solid content).

*Production Example A3: Production of acrylic resin emulsion Em-A3*

Em-A3 having an average particle size of 80 nm, a non-volatile content of 30%, an acid value of 15 mgKOH/g (as a basis of the solid content) and a hydroxyl value of 35 mgKOH/g (as a basis of the solid content) was prepared in a similar manner to that of the Production Example 2 (Em) except that the monomer formulation for the emulsion was altered as shown in Table 1.

*Production Example A4: Production of acrylic resin emulsion Em -A4*

Into a reaction vessel, 135.400 parts of ion-exchanged water and 1.100 parts of AQUARON HS-10 (polyoxyethylenealkylpropenyl phenyl ether sulfate; produced by Dai-ichi Kogyo Seiyaku Co., Ltd.) were added, and temperature was raised to 80˚C while mixing the mixture with stirring under a nitrogen flow. Then, an ethylenically unsaturated monomer mixture containing 35.695 parts of methyl acrylate, 8.570 parts of butyl methacrylate, 5.700 parts of 2-hydroxyethyl methacrylate, 20.000 parts of styrene, 0.035 part of allyl methacrylate, 0.500 part of AQUARON HS-10, 0.500 part of ADEKA REASOAP NE-20 (α-[1-[(allyloxy)methyl]-2-nonylphenoxy]ethyl)-ω-hydroxyoxyethylene; produced by ADEKA CORPORATION, 80% aqueous solution) and 49.700 parts of ion-exchanged water, for the first stage, and an initiator solution containing 0.210 part of ammonium persulfate and 8.600 parts of ion-exchanged water were simultaneously added dropwise into the reaction vessel over 2 hours respectively. After completion of the dropwise addition, aging was carried out at the same temperature for 1 hour.

Furthermore, an ethylenically unsaturated monomer mixture containing 25.285 parts of butyl methacrylate, 2.400 parts of 2-hydroxyethyl methacrylate, 2.300 parts of methacrylic acid, 0.015 part of allyl methacrylate, 0.100 part of AQUARON HS-10 and 24.700 parts of ion-exchanged water, for the second stage, and an initiator solution containing 0.080 part of ammonium persulfate and 7.400 parts of ion-exchanged water were simultaneously added dropwise into the reaction vessel at 80˚C over 0.5 hour respectively. After completion of the dropwise addition, aging was carried out

at the same temperature for 2 hours.

Subsequently, the mixture was cooled to 40˚C and filtered through a 400 mesh filter, and then 2.140 parts of ion-exchanged water and 0.240 part of dimethylaminoethanol were added thereto to adjust pH at 6.5 to give an emulsion resin Em-A4 having an average particle size of 80 nm, a non-volatile content of 30%, an acid value of 15 mgKOH/g (as a basis of the solid content) and a hydroxyl value of 35 mgKOH/g (as a basis of the solid content).

*Production Example A5: Production of acrylic resin emulsion Em-A5*

Em-A5 having an average particle size of 80 nm, a non-volatile content of 30%, an acid value of 15 mgKOH/g (as a basis of the solid content) and a hydroxyl value of 35 mgKOH/g (as a basis of the solid content) was prepared in a similar manner to that of the Production Example 4 (Em) except that the monomer formulation for the emulsion was altered as shown in Table 1.

**Table 1**

| | | | Ethylenically unsaturated monomer mixture for first stage | | | | | Ethylenically unsaturated monomer mixture for second stage | | | |
|---|---|---|---|---|---|---|---|---|---|---|---|
| | Cross-linking agent | Amount of cross-linking agent | Methyl acrylate | Butyl methacrylate | 2-hdroxyethyl methacrylate | Styrene | Cross-linking agent | Butyl meth-acrylate | 2-hdroxyethyl methacrylate | Methacrylic acid | Cross-linking agent |
| EmA1 | None | 0% by weight | 35.730 | 8.570 | 5.700 | 20.000 | 0.000 | 25.300 | 2.400 | 2.300 | 0.000 |
| EmA2 | EGDM | 0.05% by weight | 35.695 | 8.570 | 5.700 | 20.000 | 0.035 | 25.285 | 2.400 | 2.300 | 0.015 |
| EmA3 | | 1.0% by weight | 35.030 | 8.570 | 5.700 | 20.000 | 0.700 | 25.000 | 2.400 | 2.300 | 0.300 |
| EmA4 | AMA | 0.05% by weight | 35.695 | 8.570 | 5.700 | 20.000 | 0.035 | 25.285 | 2.400 | 2.300 | 0.015 |
| EmA5 | | 1.0% by weight | 35.030 | 8.570 | 5.700 | 20.000 | 0.700 | 25.000 | 2.400 | 2.300 | 0.300 |

EGDM: Ethylene glycol dimethacrylate
AMA: Allyl methacrylate

*Production Example A6: Production of water-soluble acrylic resin*

Into a reaction vessel, 23.89 parts of dipropylene glycol methyl ether and 16.11 parts of propylene glycol methyl ether were added, and temperature was raised to 105°C while mixing the mixture with stirring under a nitrogen flow. Then, 13.1 parts of methyl methacrylate, 68. 4 parts of ethyl acrylate, 11.6 parts of 2-hydroxyethyl methacrylate and 6.9 parts of methacrylic acid, and an initiator solution containing 10.0 parts of dipropylene glycol methyl ether and 1 part of t-butylperoxy 2-ethylhexanoate were simultaneously added dropwise into the reaction vessel over 3 hours respectively. After completion of the dropwise addition, aging was carried out at the same temperature for 0.5 hour.

Subsequently, an initiator solution containing 5.0 parts of dipropylene glycol methyl ether and 0.3 part of t-butylperoxy 2-ethylhexanoate was added dropwise into the reaction vessel over 0.5 hour. After completion of the dropwise addition, aging was carried out at the same temperature for 2 hours.

Furthermore, 16.11 parts of the solvent was evaporated at 110°C under a reduced pressure (70 torr) with a solvent-removing apparatus, and then 204 parts of ion-exchanged water and 714 parts of dimethylethanolamine were added thereto to give a water-soluble acrylic resin. The non-volatile content of the resulted acrylic resin solution was 30.0%, an acid value was 40 mgKOH/g (as a basis of the solid content) and a hydroxyl value was 50 mgKOH/g (as a basis of the solid content).

*Production Example A7: Production of acrylic resin AcA1*

Into a reaction vessel, 50 parts of MFDG (methylpropylene diglycol; produced by NIPPON NYUKAZAI Co., Ltd.) was added, and the temperature was raised to 130°C with stirring under a nitrogen flow. Then, an ethylenically unsaturated monomer mixture (monomer mixture (a)) containing 14.77 parts of acrylic acid, 32.48 parts of 2-hydroxyethyl methacrylate, 47.75 parts of butyl acrylate and 5 parts of MSD-100 ($\alpha$-methylstyrene dimer; produced by Mitsui Chemicals Inc.), and an initiator solution (b) containing 13 parts of KAYAESTER O (tert-butyl peroctanoate; produced by KAYAKU-AKUZO Inc.) and 10 parts of MFDG were simultaneously added dropwise into the reaction vessel over 3 hours respectively. After completion of the dropwise addition, a 0.5 hour interval was placed, and then an initiator solution (c) containing 0.5 part of KAYAESTER O and 5 parts of MFDG was further added dropwise over 0.5 hour. After completion of the dropwise addition, aging was carried out at the same temperature for 1 hour.

Subsequently, the mixture was cooled to 50°C to give an acrylic resin Ac1 having a non-volatile content of 60%, an acid value of 110 mgKOH/g (as a basis of the solid content), a hydroxyl value of 140 mgKOH/g (as a basis of the solid content) and a number average molecular weight (Mn) of 3000.

*Production Example A8: Production of aqueous dispersion of hydrophobic melamine resin MFD-A*1

178.5 parts of the acrylic resin AcA1 prepared inthe Production Example A7 was mixed with 800 parts of U-VAN 20SB (a fully butylated melamine resin; produced by CYTEC Japan Ltd., a non-volatile content of 75%), and the mixture was stirred at 80°C for 4 hours. Then, 18.3 parts of dimethylethanolamine was added thereto, homogeneously dispersed and cooled to 40°C, and then, 1003.2 parts of ion-exchanged water was added dropwise thereto over 1 hour to give an aqueous dispersion of the hydrophobic melamine resin: MFD-A1. The particle size of the resin particle in the aqueous dispersion was 80 nm.

*Example A1*

153.3 parts of the acrylic resin emulsion Em-A1 prepared in the Production Example A1, 5 parts of a 10% (by weight) aqueous dimethylethanolamine solution, 16.7 parts of the water-soluble acrylic resin prepared in the Production Example A6, 10 parts of PRIMEPOLE PX-1000 (a bifunctional polyether polyol; produced by Sanyo Chemical Industries Ltd., a number average molecular weight of 1000, a hydroxyl value of 278 mgKOH/g, water tolerance was infinite), 100 parts of MFD-A1 prepared in the Production Example A8, 19 parts of ALPASTE MH8801, as a luster color pigment, (aluminum pigment; produced by Asahi Kasai Corporation) and 30 parts of ethylene glycol monohexyl ether were mixed with stirring, and then 10% by weight of an aqueous dimethylaminoethanol solution was added to adjust pH at 8.5, and the mixture was homogeneously dispersed to give a water-borne metallic color coating composition. Furthermore, ion-exchanged water was added to dilute the composition so that the viscosity of the coating composition was 60 (seconds) by a No.4 Ford cup (at 20°C) to give a water-borne metallic color coating composition for a coating procedure.

*Formation of multilayered coating film*

A cationic electrodeposition coating composition "POWERTOP V-20 (under a product name)" producedby Nippon Paint Co., Ltd. and a polyester-melamine gray intermediate coating composition "ORGA H-870 (under a product

name)" producedby Nippon Paint Co., Ltd. were applied on a phosphate-treated steel plate in this order, heated and cured, so that the thickness of the resulting dried electrodeposition coating film was 25 μm and the thickness of the resulting dried intermediate coating film was 40 μm, to give a test plate. The above-prepared water-borne metallic color coating composition was applied on the test plate with an electrostatic coating machine: Auto REA (under a product name, manufactured by Landsberg Inc.) at an atomization pressure of 5 $Kg/cm^2$. The plate was pre-heated at 80˚C for 5 minutes. "MACFLOW O-1810 (under a product name) " produced by Nippon Paint Co. , Ltd. (an acid-epoxy curing type acrylic resin clear coating composition produced by Nippon Paint Co., Ltd.) was applied on the test plate with a spraying by a wet-on-wet procedure. The plate was set for about 7 minutes, and then baked and dried at 140˚C for 30 minutes to give a coated test plate in a 2 coating and 1 baking (2C1B) application procedure. Herein, the cured metallic color coating film has a dried thickness of 15 μm and the cured clear coating film has a dried thickness of 40 μm.

Examples A2 to A5

A water-borne base coating composition (Example A2 to A5) was prepared in a similar manner to that of the Example A1 for the coating composition except that the emulsion resin was altered as shown in Table 2. Subsequently, according to a similar manner to that of the Example A1, a multilayered coating film was formed.

**Table 2**

| | | Example A1 | Example A2 | Example A3 | Example A4 | Example A5 |
|---|---|---|---|---|---|---|
| | Emulsion | EmA1 | EmA2 | EmA3 | EmA4 | EmA5 |
| FF property | Single base coating film | 4.30 | 4.38 | 4.45 | 4.25 | 4.30 |
| | After clear coating | 3.50 | 4.00 | 4.15 | 3.99 | 4.12 |
| | Variation of color difference (%) | 81.4 | 91.3 | 93.3 | 93.9 | 95.8 |

One of the water-borne metallic color coating compositions (Examples A1 to A5) was applied and dried to form a single base coating film. FF value of the base coating film (single) was determined according to the following evaluation method. Results are shown in the above Table 2.

Furthermore, a clear coating composition was applied on the base coating film to form a multilayered coating film. FF value of the multilayered coating film was determined as well. Results are shown in the above Table 2.

In addition, variation of color difference between the FF value of the single base coating film and the FF value after clear coating, i.e., (FF value after clear coating)/(FF value of the single base coating film) x 100 (%) was determined and shown in Table 2.

*Evaluation method*

*Flip-flop property (FF property)*

Flip-flop property was evaluated, with a "MINOLTA Bending Color Difference Meter CM512-M2" produced by Minolta Co., Ltd., wherein L value of the coating film at 15 degree relative to the incident light and L value of the coating film at 75 degree relative to the incident light were measured. Herein, the flip-flop property can be determined by a ratio of (L value at 15 degree)/(L value at 110 degree).

The phrase that the "flip-flop property is significant" as used herein means that when the metallic coating film is visually observed in front of the coating film (i.e., in a perpendicular direction to the coating surface), the observed color is bright, brilliant and superior in its luster color, and on the other hand, when the metallic coating film is visually observed in a horizontal direction to the coating film, the luster color is weak and the original color is clearly observed, and therefore the brightness contrast between them is significant. Accordingly, the phrase that the "flip-flop property is significant" means that the metallic color coating film has a metallic color remarkably changing depending on the viewing angle, which is an excellent design.

As seen from the results shown in the above Table 2, it is excellent that the difference between the FF value of the single base coating film and the FF value after clear coating is smaller, the adverse influence by the application of the clear coating composition issmaller. It is also excellent that the variation of the color difference is nearer to 100%. Example A1 has the variation of about 81%, Examples A2 to A5 have variations, each of which exceeds 90%. The

difference between the FF value of the base coating film and the FF value after clear coating is small. Herein, the variation of Example A1 is smaller than those of the Examples A2 to A5. It is considered that the water-borne metallic color coating composition in the Example A1 contains the acrylic resin emulsion Em-A1 free of an unsaturated monomer having at least two unsaturated double bonds.

*Production Example B1: Production of acrylic resin emulsion Em-B1*

Into a reaction vessel, 135.4 parts of ion-exchanged water and 1.1 parts of AQUARON HS-10 (polyoxyethylene alkylpropenylphenyl ether sulfate; produced by Dai-ichi Kogyo Seiyaku Co., Ltd.) were added, and temperature was raised to 80˚C while mixing the mixture with stirring under a nitrogen flow. Then, an ethylenically unsaturated monomer mixture containing 25.21 parts of methyl acrylate, 22.37 parts of ethyl acrylate, 7.42 parts of 2-hydroxyethyl methacrylate and 15 parts of methyl methacrylate, for the first stage, and an initiator solution containing 0.21 part of ammonium persulfate and 8.6 parts of ion-exchanged water were simultaneously added dropwise into the reaction vessel over 2 hours respectively. After completion of the dropwise addition, aging was carried out at the same temperature for 1 hour.

Furthermore, an ethylenically unsaturated monomer mixture containing 23.54 parts of ethyl acrylate, 1.86 parts of 2-hydroxyethyl methacrylate and 4.60 parts of methacrylic acid, for the second stage, and an initiator solution containing 0.08 part of ammonium persulfate and 7.4 parts of ion-exchanged water were simultaneously added dropwise into the reaction vessel at 80˚C over 0.5 hour respectively. After completion of the dropwise addition, aging was carried out at the same temperature for 2 hours.

Subsequently, the mixture was cooled to 40˚C and filtered through a 400 mesh filter, and then 2.14 parts of ion-exchanged water and 0.24 part of dimethylethanolamine were added thereto to adjust pH at 6.5 to give an acrylic resin emulsion Em-B1 having an average particle size of 80 nm, a non-volatile content of 30%, an acid value of 30 mgKOH/g (as a basis of the solid content) and a hydroxyl value of 40 mgKOH/g (as a basis of the solid content).

*Production Example B2: Production of water-soluble acrylic resin (same as the Production Example A6 as described above)*

Into a reaction vessel, 23.89 parts of dipropylene glycol methyl ether and 16.11 parts of propylene glycol methyl ether were added, and temperature was raised to 105˚C while mixing the mixture with stirring under a nitrogen flow. Then, 13.1 parts of methyl methacrylate, 68. 4 parts of ethyl acrylate, 11. 6 parts of 2-hydroxyethyl methacrylate and 6.9 parts of methacrylic acid, and an initiator solution containing 10.0 parts of dipropylene glycol methyl ether and 1 part of t-butylperoxy 2-ethylhexanoate were simultaneously added dropwise into the reaction vessel over 3 hours respectively. After completion of the dropwise addition, aging was carried out at the same temperature for 0.5 hour.

Subsequently, an initiator solution containing 5.0 parts of dipropylene glycol methyl ether and 0.3 part of t-butylperoxy 2-ethylhexanoate was added dropwise into the reaction vessel over 0.5 hour. After completion of the dropwise addition, aging was carried out at the same temperature for 2 hours.

Furthermore, 16.11 parts of the solvent was evaporated under a reduced pressure (70 torr) at 110˚C with a solvent removing apparatus, and then 204 parts of ion-exchanged water and 714 parts of dimethylethanolamine were added thereto to give a water-soluble acrylic resin. The non-volatile content of the resulted acrylic resin solution was 30.0%, an acid value was 40 mgKOH/g (as a basis of the solid content) and a hydroxyl value was 50 mgKOH/g (as a basis of the solid content).

*Production Example B3: Production of acrylic resin Ac-B1 (same as the Production Example A7 as described above)*

Into a reaction vessel, 50 parts of MFDG (methylpropylene diglycol; produced by NIPPON NYUKAZAI Co., Ltd.) was added, and temperature was raised to 130˚C with stirring under a nitrogen flow. Then, an ethylenically unsaturated monomer mixture containing 14.77 parts of acrylic acid, 32.48 parts of 2-hydroxyethyl methacrylate, 47.75 parts of butyl acrylate and 5 parts of MSD-100 ($\alpha$-methylstyrene dimer; produced by Mitsui Chemicals Inc.), and an initiator solution containing 13 parts of KAYAESTER O (tert-butyl peroctanoate; produced by KAYAKU-AKUZO Inc.) and 10 parts of MFDG were simultaneously added dropwise into the reaction vessel over 3 hours respectively. After completion of the dropwise addition, a 0.5 hour interval was placed, and then an initiator solution containing 0.5 part of KAYAESTER and 5 parts of MFDG was further added dropwise over 0.5 hour. After completion of the dropwise addition, aging was carried out at the same temperature for 1 hour.

Subsequently, the mixture was cooled to 50˚C to give an acrylic resin Ac-B1 having a non-volatile content of 60%, an acid value of 110 mgKOH/g (as a basis of the solid content), a hydroxyl value of 140 mgKOH/g (as a basis of the solid content) and a number average molecular weight of 3000.

*Production Example B4: Production of aqueous dispersion of hydrophobic melamine resin MFD-B1 (same as the Production Example A8 as described above)*

178.5 Parts of the acrylic resin Ac-B1 prepared in the Production Example B3 was mixed with 800 parts of U-VAN 20SB (a fully butylated melamine resin; produced by CYTEC Japan Ltd., a non-volatile content of 75%, SP = 9.6), and the mixture was stirred at 80˚C for 4 hours. Then, 18.3 parts of dimethylethanolamine was added thereto, homogeneously dispersed and cooled to 40˚C, and then, 1003.2 parts of ion-exchanged water was added dropwise thereto over 1 hour to give an aqueous dispersion of the hydrophobic melamine resin: MFD-B1. The particle size of the resin particle in the aqueous dispersion was 80 nm.

*Example B1*

153.3 Parts of the acrylic resin emulsion Em-B1 prepared in the Production Example B1, 5 parts of a 10% (by weight) aqueous dimethylethanolamine solution, 16.7 parts of the water-soluble acrylic resin prepared in the Production Example B2, 10 parts of PRIMEPOLE PX-1000 (a bifunctional polyether polyol; produced by Sanyo Chemical Industries Ltd., a number average molecular weight of 1000, a hydroxyl value of 278 mgKOH/g, water tolerance was infinite), 100 parts of MFD-B1 prepared in the Production Example B4, 19 parts of ALPASTE MH8801 as a luster color pigment (aluminum pigment; produced by Asahi Kasai Corporation), 30 parts of ethylene glycol monohexyl ether and 0.1 part of polyoxyalkylene compound B listed in the following Table 1 were mixed with stirring, and an 10% (by weight) aqueous dimethylaminoethanol solution was added to adjust pH at 8.5, and the mixture was homogeneously dispersed to give a water-borne metallic color coating composition B1. Furthermore, ion-exchanged water was added to dilute the coating composition, so that the viscosity of the coating composition was 60 (seconds) by a No.4 Ford cup (at 20˚C), to give a water-borne metallic color coating composition for a coating procedure.

*Formation of multilayered coating film*

A cationic electrodeposition coating composition "POWERTOP V-20 (under a product name)" producedby Nippon Paint Co., Ltd. and a polyester-melamine gray intermediate coating composition "ORGA H-870 (under a product name)" producedby Nippon Paint Co., Ltd. were applied on a phosphate-treated steel plate in this order, heated and cured, so that the thickness of the resulting dried electrodeposition coating film was 25 $\mu$m and the thickness of the resulting dried intermediate coating film was 40 $\mu$m, to give a test plate. The above-prepared water-borne base coating composition was applied on the test plate with an electrostatic coating machine: Auto REA (under a product name, manufactured by Landsberg Inc.) at an atomization pressure of 5 $Kg/cm^2$. The plate was pre-heated at 80˚C for 5 minutes. "MACFLOW O-1810 (under a product name)" producedby Nippon Paint Co., Ltd. (an acid-epoxy curing type acrylic resin clear coating composition produced by Nippon Paint Co., Ltd.) was applied on the test plate with a spraying by a wet-on-wet procedure. The plate was set for about 7 minutes, and then baked and dried at 140˚C for 30 minutes to give a coated test plate in a 2 coating and 1 baking (2C1B) application procedure. Herein, the cured metallic color coating film has a dried thickness of 15 $\mu$m and the cured clear coating film has a dried thickness of 40 $\mu$m.

*Examples B2 to B7*

A water-borne metallic color coating composition was prepared in a similar manner to that of the above-mentioned Example B1 except that the polyoxyalkylene compound and the addition amount thereofwere altered as shown in Table 3. Subsequently, a multilayered coating film was formed in a similar manner to that of the Example B1.

One of the water-borne metallic color coating compositions (Examples B1 to B7) was applied and dried to form a single base coating film. FF value of the single base coating film was determined according to the above-described evaluation method. Results are shown in the following Table 4.

Furthermore, a clear coating composition was applied on the base coating film to form a coating film. FF value of the coating film was determined as well. Results are shown in the following Table 3.

In addition, variation of color difference between the FF value of the single base coating film and the FF value after clear coating, i.e., (FF value after clear coating) / (FF value of the single base coating film) x 100 (%) was determined and shown in Table 4.

*Evaluation method*

Flip-flop property (FF property) (same as the flip-flop property as described above)

Flip-flop property was evaluated, with a "MINOLTA Bending Color Difference Meter CM512-M2" produced by

Minolta Co., Ltd., wherein L value of the coating film at 15 degree relative to the incident light and L value of the coating film at 110 degree relative to the incident light were measured. Herein, the flip-flop property can be determined by a ratio of (L value at 15 degree)/(L value at 110 degree).

The phrase that the "flip-flop property is significant" as used herein means that when the metallic coating film is visually observed in front of the coating film (i.e., in a perpendicular direction to the coating surface), the observed color is bright, brilliant and superior in its luster color, and on the other hand, when the metallic coating film is visually observed in a horizontal direction to the coating film, the luster color is weak and the original color is clearly observed, and therefore the brightness contrast between them is significant. Accordingly, the phrase that the "flip-flop property is significant" means that the metallic color coating film has a metallic color remarkably changing depending on the viewing angle, which is an excellent design.

**Table 3**

| | Product name (*1) | Molecular weight (Mw) | OR | f |
|---|---|---|---|---|
| Polyoxyalkylene compound A | SN-4X 5526 | 6000 | R = ethylene group | 136 |
| Polyoxyalkylene compound B | SN-4X 5527 | 20000 | R = ethylene group | 455 |
| Polyoxyalkylene compound C | SN-4X 5406 | 100000 | R = ethylene group | 2273 |
| Polyoxyalkylene compound D | SN-4X 5528 | 700000 | R = ethylene group | 15900 |
| Product name, molecular weight and structure ofpolyoxyalkylene compound C: $H(-OR)_f-OH$ *1 All compounds are commercially available from SAN NOPCO Ltd. (in Kyoto Prefecture). | | | | |

**Table 4**

| | | Example B1 | Example B2 | Example B3 | Example B4 | Example B5 | Example B6 | Example B7 |
|---|---|---|---|---|---|---|---|---|
| Polyoxyalkylene compound | | B | B | C | C | D | A | C |
| Addition amount of polyoxyalkylene compound (phr*) | | 0.1 | 0.5 | 0.1 | 0.5 | 0.1 | 0.5 | 0.005 |
| FF property | Single base coating film | 4.38 | 4.45 | 4.25 | 4.30 | 4.30 | 4.30 | 4.23 |
| | After clear coating | 4.00 | 4.15 | 3.99 | 4.12 | 4.20 | 3.50 | 3.50 |
| | Variation of color difference (%) | 91.3 | 93.3 | 93.9 | 95.8 | 97.7 | 81.4 | 82.7 |
| *phr: part(s) by weight relative to 100 parts by weight of the solid resin content | | | | | | | | |

As seen from the results shown in the above Table 4, it is excellent that the difference between the FF value of the base coating film (single) and the FF value after clear coating is smaller, the adverse influence by the application of the clear coating composition is smaller. It is also excellent that the variation of the color difference is nearer to 100%. Examples B6 and B7 have the variations of about 81% and about 82% respectively, Examples B1 to B5 have variations, each of which exceeds 90%. The difference between the FF value of the base coating film and the FF value after clear coating is small. Herein, the variations of Examples B6 and B7 are smaller than those of the Examples B1 to B5. It is considered that the added polyoxyalkylene compound has a comparatively small weight average molecular weight, and the added amount is small.

*Production of viscosity improving agent*

*Production Example A-1*

Water was removed from a dococyl alcohol-ethylene oxide (50 mol) adduct (505 parts (0.2 part by mol)) having a hydroxyl value of 822.2 mgKOH/g and a number average molecular weight of 2526 wherein the number average molecular weight was calculated based on the hydroxyl value (hereinafter, it was also applicable) at 90 to 100˚C for 3 hours at a reduced pressure (-0.095 to -0.098 MPa) in order to set the moisture content at 0.005% or less according to Karl Fisher method (hereinafter, it was also applicable). Then, temperature was decreased to 70˚C, and 16.8 parts (0.1 part by mol) of hexamethylene diisocyanate [TAKENATE 700 produced by Mitsui Takeda Chemicals Inc. and 0.07 part of dibutyltin dilaurate [STANN BL produced by Sankyo Organic Chemicals Co., Ltd.] were added thereto, and the mixture was reacted at 80 to 100˚C for 5 hours under a nitrogen flow to give a white sticky liquid urethane compound (A-1). Herein, the disappearance of an isocyanato group was confirmed by a method for measuring the content of the isocyanato groups with a dioxane solution of di-n-butylamine (hereinafter, it was also applicable). Furthermore, a weight average molecular weight (Mw) according to a GPC measurement with a polystyrene standard was 9000.

Subsequently, 15 parts of A-1 was diluted with 24 parts of propylene glycol monopropyl ether and 61 parts of deionized water to give an A-1 solution. The solutions of the following A-2 to A-5 and B-1 to B-6 were prepared as well. They were utilized as a coating composition.

*Production Example A-2*

Water was removed from an octadecyl alcohol-ethylene oxide (35 mol) adduct (724 parts (0.4 part by mol)) having a hydroxyl value of 36.0 mgKOH/g and a number average molecular weight of 1810 at 90 to 100˚C for 3 hours at a reduced pressure (-0.095 to -0.098 MPa) in order to set the moisture content at 0.003% or less. Then, temperature was decreased to 70˚C, and 44.4 parts (0.2 part by mol) of isophorone diisocyanate [IPDI produced by Sumitomo Bayer Urethane Co., Ltd.] and 0.07 part of dibutyltin dilaurate were added thereto, and the mixture was reacted at 80 to 100˚C for 5 hours under a nitrogen flow to give a white sticky liquid urethane compound (A-2), wherein Mw was 6000.

*Production Example A-3*

Water was removed from a dococyl alcohol-ethylene oxide (70 mol) adduct (681 parts (0.2 part by mol)) having a hydroxyl value of 16.5 mgKOH/g and a number average molecular weight of 3406 at 90 to 100˚C for 3 hours at a reduced pressure (-0.095 to -0.098 MPa) in order to set the moisture content at 0.004% or less. Then, temperature was decreased to 70˚C, and 18.8 parts (0.1 part by mol) of xylylene diisocyanate [TAKENATE 500 produced by Mitsui Takeda Chemicals Inc.] and 0.07 part of dibutyltin dilaurate were added thereto, and the mixture was reacted at 80 to 100˚C for 5 hours under a nitrogen flow to give a white sticky liquid urethane compound (A-3), wherein Mw was 11000.

*Production Example A-4*

Water was removed from a dococyl alcohol-ethylene oxide (180 mol) adduct (660 parts (0.08 part by mol)) having a hydroxyl value of 6.8 mgKOH/g and a number average molecular weight of 8246 at 90 to 100˚C for 3 hours at a reduced pressure (-0.095 to -0.098 MPa) in order to set the moisture content at 0.005% or less. Then, temperature was reduced to 70˚C, and 8.9 parts (0.04 part by mol) of isophorone diisocyanate and 0.07 part of dibutyltin dilaurate were added thereto, and the mixture was reacted at 80 to 100˚C for 5 hours under a nitrogen flow to give a white sticky liquid urethane compound (A-4), wherein Mw was 20000.

*Production Example A-5*

Water was removed from a dococyl alcohol-ethylene oxide (230 mol) adduct (627 parts (0.06 part by mol)) having a hydroxyl value of 5.4 mgKOH/g and a number average molecular weight of 10446) at 90 to 100˚C for 3 hours at a reduced pressure (-0.095 to -0.098 MPa) in order to set the moisture content at 0.005% or less. Then, temperature was decreased to 70˚C, and 5.0 parts (0.03 part by mol) of hexamethylene diisocyanate and 0.07 part of dibutyltin dilaurate were added thereto, and the mixture was reacted at 80 to 100˚C for 5 hours under a nitrogen flow to give a white sticky liquid urethane compound (A-5), wherein Mw was 25000.

*Production Example B-1*

415 Parts (0.05 part by mol) of PEG-6000S [produced by Sanyo Chemical Industries Ltd.; a polyethylene glycol

having a hydroxyl value of 13.5 mgKOH/g and a number average molecular weight of 8300] and 329 parts (0.2 part by mol) of a dococyl alcohol-ethylene oxide (30 mol) adducthaving a hydroxyl value of 34.1 mgKOH/g and a number average molecular weight of 1646 were mixed. Water was removed from the mixture at 90 to 100˚C for 3 hours at a reduced pressure (-0.095 to -0.098 MPa) in order to set the moisture content of the mixture at 0.005% or less. Then, the mixture was cooled to 70˚C, and 33.3 parts (0.15 part by mol) of isophorone diisocyanate and 0.1 part of dibutyltin dilaurate were added thereto, and the mixture was reacted at 80 to 100˚C for 5 hours under a nitrogen flow to give a white sticky liquid urethane compound (B-1), wherein Mw was 20000.

*Production Example B-2*

1079 Parts (0.13 part by mol) of PEG-6000S and 153 parts (0.2 part by mol) of a dococyl alcohol-ethylene oxide (10 mol) adduct having a hydroxyl value of 733 mgKOH/g and a number average molecular weight of 766 were mixed. Water was removed from the mixture at 90 to 100˚C for 3 hours at a reduced pressure (-0.095 to -0.098 MPa) in order to set the moisture content of the mixture at 0.005% or less. Then, the mixture was cooled to 70˚C, and 38.6 parts (0.15 part by mol) of hexamethylene diisocyanate and 0.15 part of dibutyltin dilaurate were added thereto, and the mixture was reacted at 80 to 100˚C for 5 hours under a nitrogen flow to give a white sticky liquid urethane compound (B-2), wherein Mw was 31000.

*Production Example B-3*

1566 Parts (0.12 part by mol) of PEG-13000 [produced by Sanyo Chemical Industries Ltd.; a polyethylene glycol having a hydroxyl value of 8.6 mgKOH/g and a number average molecular weight of 13050] and 109 parts (0.2 part by mol) of a dococyl alcohol-ethylene oxide (5 mol) adduct having a hydroxyl value of 103 mgKOH/g anda number average molecular weight of 546 were mixed. Water was removed from the mixture at 90 to 100˚C for 3 hours at a reduced pressure (-0.095 to -0.098 MPa) in order to set the moisture content of the mixture at 0.005% or less. Then, the mixture was cooled to 70˚C, and 41.4 parts (0.22 part by mol) of xylylene diisocyanate and 0.17 part of dibutyltin dilaurate were added thereto, and the mixture was reacted at 80 to 100˚C for 5 hours under a nitrogen flow to give a white sticky liquid urethane compound (B-3), wherein Mw was 48000.

*Production Example B-4*

1162 Parts (0.14 part by mol) of PEG-6000S and 257 parts (0.2 part by mol) of a dococyl alcohol-ethylene oxide (25 mol) adduct having a hydroxyl value of 43.6 mgKOH/g and a number average molecular weight of 1286 were mixed. Water was removed from the mixture at 90 to 100˚C for 3 hours at a reduced pressure (-0.095 to -0.098 MPa) in order to set the moisture content of the mixture at 0.005% or less. Then, the mixture was cooled to 70˚C, and 53.3 parts (0.24 part by mol) of isophorone diisocyanate and 0.12 part of dibutyltin dilaurate were added thereto, and the mixture was reacted at 80 to 100˚C for 5 hours under a nitrogen flow to give a white sticky liquid urethane compound (B-4), wherein Mw was 33000.

*Production Example B-5*

800 Parts (0.04 part by mol) of PEG-20000 [produced by Sanyo Chemical Industries Ltd.; a polyethylene glycol having a hydroxyl value of 5.6 mgKOH/g and a number average molecular weight of 20000] and 41.7 parts (0.02 part by mol) of a dococyl alcohol-ethylene oxide (40 mol) adducthaving a hydroxyl value of 26.9 mgKOH/g and a number average molecular weight of 2086 were mixed. Water was removed from the mixture at 90 to 100˚C for 3 hours at a reduced pressure (-0.095 to -0.098 MPa) in order to set the moisture content of the mixture at 0.005% or less. Then, the mixture was cooled to 70˚C, and 8.4 parts (0.05 part by mol) of hexamethylene diisocyanate and 0.1 part of dibutyltin dilaurate were added thereto, and the mixture was reacted at 80 to 100˚C for 5 hours under a nitrogen flow to give a white sticky liquid urethane compound (B-5), wherein Mw was 120000.

*Production Example B-6*

660 Parts (0.2 part by mol) of PEG-4000S [produced by Sanyo Chemical Industries Ltd.; a polyethylene glycol having a hydroxyl value of 34 mgKOH/g and a number average molecular weight of 3300] and 109 parts (0.2 part by mol) of a dococyl alcohol-ethylene oxide (5 mol) adduct having a hydroxyl value of 103 mgKOH/g anda number average molecular weight of 546 were mixed. Water was removed from the mixture at 90 to 100˚C for 3 hours at a reduced pressure (-0.095 to -0.098 MPa) in order to set the moisture content of the mixture at 0.005% or less. Then, the mixture was cooled to 70˚C, and 56.4 parts (0.3 part by mol) of xylylene diisocyanate and 0.1 part of dibutyltin dilaurate were

added thereto, and the mixture was reacted at 80 to 100°C for 5 hours under a nitrogen flow to give a white sticky liquid urethane compound (B-6), wherein Mw was 10000.

*Production Example C1: Production of acrylic resin emulsion Em-C1*

Into a reaction vessel, 135.4 parts of ion-exchanged water and 1.1 parts of AQUARON HS-10 were added, and temperature was raised to 80°C while mixing the mixture with stirring under a nitrogen flow. Then, an ethylenically unsaturated monomer mixture containing 35.73 parts of methyl acrylate, 8.57 parts of butyl methacrylate, 5.70 parts of 2-hydroxyethyl methacrylate, 20.00 parts of styrene, 0.50 part of AQUARON HS-10, 0.50 part of ADEKAREA SOAP NE-20 and 49.70 parts of ion-exchanged water, for the first stage, and an initiator solution containing 0.21 part of ammonium persulfate and 8.60 parts of ion-exchanged water were simultaneously added dropwise into the reaction vessel over 2 hours respectively. After completion of the dropwise addition, aging was carried out at the same temperature for 1 hour.

Furthermore, an ethylenically unsaturated monomer mixture containing 26.05 parts of butyl methacrylate, 2.40 parts of 2-hydroxyethyl methacrylate, 1. 55 parts of methacrylic acid, 0.10 part of AQUARON HS-10 and 24.70 parts of ion-exchanged water, for the second stage, and an initiator solution containing 0.08 part of ammonium persulfate and 7.40 parts of ion-exchanged water were simultaneously added dropwise into the reaction vessel at 80°C over 0.5 hour respectively. After completion of the dropwise addition, aging was carried out at the same temperature for 2 hours.

Subsequently, the mixture was cooled to 40°C and filtered through a 400 mesh filter, and then 2.14 parts of ion-exchanged water and 0.16 part of dimethylaminoethanol were added thereto to adjust pH at 6.5 to give an emulsion resin Em-C1 having an average particle size of 80 nm, a non-volatile content of 30%, an acid value of 10 mgKOH/g (as a basis of the solid content) and a hydroxyl value of 35 mgKOH/g (as a basis of the solid content).

*Production Example C2: Production of acrylic resin emulsion Em -C2*

Into a reaction vessel, 135.4 parts of ion-exchanged water and 1.1 parts of AQUARON HS-10 (polyoxyethylenealkylpropenyl phenyl ether sulfate; produced by Dai-ichi Kogyo Seiyaku Co., Ltd.) were added, and temperature was raised to 80°C while mixing the mixture with stirring under a nitrogen flow. Then, an ethylenically unsaturated monomer mixture containing 35.03 parts of methyl acrylate, 8.57 parts of butyl methacrylate, 0.70 part of allyl methacrylate, 5.70 parts of 2-hydroxyethyl methacrylate, 20.00 parts of styrene, 0.50 part of AQUARON HS-10, 0.50 part of ADEKAREA SOAP NE-20 and 49.70 parts of ion-exchanged water, for the first stage, and an initiator solution containing 0.21 part of ammonium persulfate and 8.60 parts of ion-exchanged water were simultaneously added dropwise into the reaction vessel over 2 hours respectively. After completion of the dropwise addition, aging was carried out at the same temperature for 1 hour.

Furthermore, an ethylenically unsaturated monomer mixture containing 25.75 parts of butyl methacrylate, 0.30 part of allyl methacrylate, 2.40 parts of 2-hydroxyethyl methacrylate, 1.55 parts of methacrylic acid, 0.10 part of AQUARON HS-10 and 24.70 parts of ion-exchanged water, for the second stage, and an initiator solution containing 0.08 part of ammonium persulfate and 7.40 parts of ion-exchanged water were simultaneously added dropwise into the reaction vessel at 80°C over 0.5 hour respectively. After completion of the dropwise addition, aging was carried out at the same temperature for 2 hours.

Subsequently, the mixture was cooled to 40°C and filtered through a 400 mesh filter, and then 2.14 parts of ion-exchanged water and 0.16 part of dimethylaminoethanol were added thereto to adjust pH at 6.5 to give an emulsion resin Em-C2 having an average particle size of 80 nm, a non-volatile content of 30%, an acid value of 10 mgKOH/g (as a basis of the solid content) and a hydroxyl value of 35 mgKOH/g (as a basis of the solid content).

*Production Example C3: Production of water-soluble acrylic resin: same as the Production Example A6 as described above*

Into a reaction vessel, 23.89 parts of dipropylene glycol methyl ether and 16.11 parts of propylene glycol methyl ether were added, and temperature was raised to 105°C while mixing the mixture with stirring under a nitrogen flow. Then, 13.1 parts of methyl methacrylate, 68.4 parts of ethyl acrylate, 11. 6 parts of 2-hydroxyethyl methacrylate and 6.9 parts of methacrylic acid, and an initiator solution containing 10.0 parts of dipropylene glycol methyl ether and 1 part of t-butylperoxy 2-ethylhexanoate were simultaneously added dropwise into the reaction vessel over 3 hours respectively. After completion of the dropwise addition, aging was carried out at the same temperature for 0.5 hour.

Subsequently, an initiator solution containing 5.0 parts of dipropylene glycol methyl ether and 0.3 part of t-butylperoxy 2-ethylhexanoate was added dropwise into the reaction vessel over 0.5 hour. After completion of the dropwise addition, aging was carried out at the same temperature for 2 hours.

Furthermore, 16.11 parts of the solvent was evaporated at 110°C under a reduced pressure (70 torr) with a

solvent removing apparatus, and then 6.40 parts of dimethylethanolamine and 188.0 parts of ion-exchanged water were added thereto to give a water-soluble acrylic resin. The non-volatile content of the resulted acrylic resin solution was 30.0%, an acid value was 40 mgKOH/g (as a basis of the solid content) and a hydroxyl value was 50 mgKOH/g (as a basis of the solid content).

*Production Example C4: Production of aqueous dispersion of hydrophobic melamine resin MFD-C1: same as the Production Example A8 as described above*

Into a reaction vessel, 50 parts of MFDG (methylpropylene diglycol; produced by NIPPON NYUKAZAI Co., Ltd.) was added, and temperature was raised to 130˚C with stirring under a nitrogen flow. Then, an ethylenically unsaturated monomer mixture containing 14.77 parts of acrylic acid, 32.48 parts of 2-hydroxyethyl methacrylate, 47.75 parts of butyl acrylate and 5 parts of MSD-100 ($\alpha$-methylstyrene dimer; produced by Mitsui Chemicals Inc.), and an initiator solution containing 13 parts of KAYAESTER O (t-butyl peroctanoate; produced by KAYAKU-AKUZO Inc.) and 10 parts of MFDG were simultaneously added dropwise into the reaction vessel over 3 hours respectively. After completion of the dropwise addition, a 0.5 hour interval was placed, and then an initiator solution containing 0.5 part of KAYAESTER O and 5 parts of MFDG was further added dropwise over 0.5 hour. After completion of the dropwise addition, aging was carried out at the same temperature for 1 hour. Then, the mixture was cooled to 50˚C to given an acrylic resin Ac-C1 having a non-volatile content of 60%, an acid value of 110 mgKOH/g (as a basis of the solid content), a hydroxyl value of 140 mgKOH/g (as a basis of the solid content) and a number average molecular weight of 000.

178.5 Parts of the resulted acrylic resin Ac-C1 was mixed with 800 parts of U-VAN 20SB (a fully butylated melamine resin; produced by CYTEC Japan Ltd., a non-volatile content of 75%, Sp=9.6), and the mixture was stirred at 80˚C for 4 hours. Then, 18.3 parts of dimethylethanolamine was added thereto, homogeneously dispersed and cooled to 40˚C, and then 1003.2 parts of ion-exchanged water was added dropwise thereto over 1 hour to give an aqueous dispersion of the hydrophobic melamine resin: MFD-C1. The particle size of the resin particle in the aqueous dispersion was 80 nm.

*Example C1*

153 . 3 Parts of the acrylic resin emulsion Em-C1 prepared in the Production Example C1 as a film forming resin, 5 parts of 10% (by weight) aqueous dimethylethanolamine solution, 16.7 parts of the water-soluble acrylic resin prepared in the Production Example C2, 10 parts of PRIMEPOLE PX-1000 (a bifunctional polyether polyol; produced by Sanyo Chemical Industries Ltd., a number average molecular weight of 1000, a hydroxyl value of 278 mgKOH/g, water tolerance was infinite), 100 parts of MFD-C1 prepared inthe Production Example C3, 19 parts of ALMINUM PASTE MH8801 as a luster color pigment (aluminum pigment; produced by Asahi Kasai Corporation), 30 parts of ethylene glycol monohexyl ether, and A-1 solution and B-1 solution, each of which had the solid contentlisted inthe following Table 5 were mixed with stirring, and a 10% (by weight) aqueous dimethylaminoethanol solution was added to adjust pH at 8.5, and the mixture was homogeneously mixed to give a water-borne metallic color coating composition. Ion-exchanged water was added to dilute the resulted water-borne metallic color coating composition, so that the viscosity of the coating composition was 45 (seconds) by a No.4 Ford cup (20˚C) to give a water-borne metallic color coating composition for a coating procedure. Herein, the solid content (NV) of the water-borne metallic color coating composition was measured and the results are shown in the following Table 9.

*Formation of multilayered coating film*

A cationic electrodeposition coating composition "POWERTOP V-20 (under a product name)" producedby Nippon Paint Co., Ltd. and a polyester-melamine gray intermediate coating composition "ORGA H-870 (under a product name)" producedby Nippon Paint Co., Ltd. were applied on a phosphate-treated steel plate in this order, heated and cured, so that the thickness of the resulting dried electrodeposition coating film was 25 $\mu$m and the thickness of the resulting dried intermediate coating film was 40 $\mu$m, to give a test plate. The above-prepared water-borne base coating composition was applied on the test plate with an electrostatic coating machine: Auto REA (under a product name, manufactured by Landsberg Inc.) at an atomization pressure of 5 Kg/cm$^2$. The plate was pre-heated at 80˚C for 5 minutes. "MACFLOW O-1810 (under a product name)" (an acid-epoxy curing type acrylic resin clear coating composition produced by Nippon Paint Co., Ltd.) was applied on the test plate with a spraying by a wet-on-wet procedure. The plate was set for about 7 minutes, and then baked and dried at 140˚C for 30 minutes to give a coated test plate in a 2 coating and 1 baking (2C1B) application procedure. Herein, the cured metallic color coating film has a dried thickness of 15 $\mu$m and the cured clear coating film has a dried thickness of 40 $\mu$m. Thus prepared coated test plate was evaluated on the flip-flop property (FF) and the finished texture. Evaluation results are shown in the following Table 9. The evaluating method is described as follows.

*Examples* C2 to *C6 and C9 to C24*

A water-borne metallic color coating composition and a coated test plate were prepared in a similar manner to that of the Example C1 except that the viscosity improving agent and the amount thereof were altered as shown in the following Tables 9 to 11. NV, FF and finished texture were evaluated in the same manner to that described in the Example C1, and the results are shown in the following Tables 9 to 11.

*Examples C7 to C8*

A water-borne metallic color coating composition and a coated test plate were prepared in a similar manner to that of the Example C1 except that the acrylic resin emulsion Em-C2 prepared in the Production Example C2 was used as the film forming resin in place of the acrylic resin emulsion Em-C1 prepared in the Production Example C1, and the viscosity improving agent and the amount thereof were altered as shown in the following Table 5. NV, FF and finished texture were evaluated in the same manner to that described in the Example C1, and the results are shown in the following Table 9.

**Table 5**

| Type | Viscosity improving agent | Examples | | | | | | | |
|---|---|---|---|---|---|---|---|---|---|
| | | C1 | C2 | C3 | C4 | C5 | C6 | C7 | C8 |
| A | A-1 (Remark 1) | 0.5 | 0.5 | 0.5 | 0.5 | 0.8 | - | 0.5 | 0.5 |
| | A-2 (Remark 2) | - | - | - | - | - | 3.0 | - | - |
| | A-3 (Remark 3) | - | - | - | - | - | - | - | - |
| | A-4 (Remark 4) | - | - | - | - | - | - | - | - |
| | A-5 (Remark 5) | - | - | - | - | - | - | - | - |
| B | B-1 (Remark 6) | 0.5 | - | - | - | - | - | 0.5 | - |
| | B-2 (Remark 7) | - | 0.5 | - | - | 0.2 | 0.5 | - | 0.5 |
| | B-3 (Remark 8) | - | - | 0.5 | - | - | - | - | - |
| | B-4 (Remark 9) | - | - | - | 0.5 | - | - | - | - |
| | B-5 (Remark 10) | - | - | - | - | - | - | - | - |
| | B-6 (Remark 11) | - | - | - | - | - | - | - | - |

**Table 6**

| Type | Viscosity improving agent | Examples | | | | | | | |
|---|---|---|---|---|---|---|---|---|---|
| | | C9 | C10 | C11 | C12 | C13 | C14 | C15 | C16 |
| A | A-1 (Remark 1) | - | 1.0 | - | - | - | - | - | - |
| | A-2 (Remark 2) | - | - | 1.0 | - | - | - | - | - |
| | A-3 (Remark 3) | - | - | - | 1.0 | - | - | - | - |
| | A-4 (Remark 4) | - | - | - | - | 1.0 | - | - | - |
| | A-5 (Remark 5) | - | - | - | - | - | 1.0 | - | - |
| B | B-1 (Remark 6) | - | - | - | - | - | - | 1.0 | - |
| | B-2 (Remark 7) | - | - | - | - | - | - | - | 1.0 |
| | B-3 (Remark 8) | - | - | - | - | - | - | - | - |
| | B-4 (Remark 9) | - | - | - | - | - | - | - | - |

(continued)

| Type | Viscosity improving agent | Examples | | | | | | | |
|---|---|---|---|---|---|---|---|---|---|
| | | C9 | C10 | C11 | C12 | C13 | C14 | C15 | C16 |
| | B-5 (Remark 10) | - | - | - | - | - | - | - | - |
| | B-6 (Remark 11) | - | - | - | - | - | - | - | - |

**Table 7**

| Type | Viscosity improving agent | Examples | | | | | | | |
|---|---|---|---|---|---|---|---|---|---|
| | | C17 | C18 | C19 | C20 | C21 | C22 | C23 | C24 |
| A | A-1 (Remark 1) | - | - | - | - | 0.5 | 0.5 | 0.1 | 4.0 |
| | A-2 (Remark 2) | - | - | - | - | - | - | - | - |
| | A-3 (Remark 3) | - | - | - | - | - | - | - | - |
| | A-4 (Remark 4) | - | - | - | - | - | - | - | - |
| | A-5 (Remark 5) | - | - | - | - | - | - | - | - |
| B | B-1 (Remark 6) | - | - | - | - | - | - | - | - |
| | B-2 (Remark 7) | - | - | - | - | - | - | 0.1 | 0.5 |
| | B-3 (Remark 8) | 1.0 | - | - | - | - | - | - | - |
| | B-4 (Remark 9) | - | 1.0 | - | - | - | - | - | - |
| | B-5 (Remark 10) | - | - | 1.0 | - | 0.5 | - | - | - |
| | B-6 (Remark 11) | - | - | - | 1.0 | - | 0.5 | - | - |
| The amount listed in the table is based on the solid content. | | | | | | | | | |

**Table 8**

| | Viscosity improving agent | Mw |
|---|---|---|
| Remark 1 | A-1 | 9,000 |
| Remark 2 | A-2 | 6,000 |
| Remark 3 | A-3 | 11,000 |
| Remark 4 | A-4 | 20,000 |
| Remark 5 | A-5 | 25,000 |
| Remark 6 | B-1 | 20,000 |
| Remark 7 | B-2 | 31,000 |
| Remark 8 | B-3 | 48,000 |
| Remark 9 | B-4 | 33,000 |
| Remark 10 | B-5 | 120,000 |
| Remark 11 | B-6 | 10,000 |

*Test method*

*(1) Solid content (NV) in the diluted coating composition*

The water-borne metallic color coating composition was diluted by addition of ion-exchanged water, and the solid content of the coating composition (NV, % by weight) was measured. Herein, the viscosity of the diluted coating composition was 45 (seconds) by a No.4 Ford cup (at 20˚C).
The solid content of the coating composition was calculated by a measurement wherein 0.50 g of a sample of the coating composition was put on a precisely weighed evaporating dish, weighted, homogeneously stirred and diluted by addition of 2. OOg of deionized water, dried at 105˚C for 3 hours, weighted, and then calculated the weight difference.

*(2) Flip-flop (FF) property (same as the flip-flop property as described above)*

Flip-flop property was evaluated, with a "MINOLTA Bending Color Difference Meter CM512-M2" produced by Minolta Co., Ltd., wherein L value of the coating film at 15 degree relative to the incident light and L value of the coating film at 110 degree relative to the incident light were measured. Herein, the flip-flop property can be determined by a ratio of (L value at 15 degree) / (L value at 110 degree). Herein, the ratio is larger, the flip-flop property is more significant. The phrase that the "flip-flop property is significant" as used herein means that when the metallic coating film is visually observed in front of the coating film (i.e., in a perpendicular direction to the coating surface), the observed color is bright, brilliant and superior in its luster color, and on the other hand, when the metallic coating film is visually observed in a horizontal direction to the coating film, the luster color is weak and the original color is clearly observed, and therefore the brightness contrast between them is significant. Accordingly, the phrase that the "flip-flop property is significant" means that the metallic color coating film has a metallic color remarkably changing depending on the viewing angle, which is an excellent design.

(3) *Finished texture (solid texture)*

The short wave (SW) value was measuredon the resulted coating film with a "wave scan measurement apparatus" manufactured by BYK-Gardner Co. The finished texture of the coating film was evaluated according to the following evaluation basis: ○, Δ and ×. The results are shown in the following Tables 5 to 7.
Evaluation basis

○ : SW is 10 or less.
Δ : SW is 15 or less.
× : SW is larger than 15.

*Test results*

**Table 9**

| Evaluation items | Examples | | | | | | | |
|---|---|---|---|---|---|---|---|---|
| | C1 | C2 | C3 | C4 | C5 | C6 | C7 | C8 |
| NV (% by weight) | 25.8 | 25.4 | 25.1 | 26.4 | 25.8 | 24.5 | 26.5 | 25.4 |
| FF property | 4.15 | 4.33 | 4.11 | 3.85 | 4.38 | 4.20 | 4.35 | 4.52 |
| Finished texture | ○ | ○ | ○ | ○ | ○ | ○ | ○ | ○ |

**Table 10**

| Evaluation items | Examples | | | | | | | |
|---|---|---|---|---|---|---|---|---|
| | C9 | C10 | C11 | C12 | C13 | C14 | C15 | C16 |
| NV (% by weight) | 32.0 | 26.8 | 27.8 | 26.1 | 24.3 | 21.3 | 23.4 | 23.2 |

(continued)

| Evaluation items | Examples | | | | | | | |
|---|---|---|---|---|---|---|---|---|
| | C9 | C10 | C11 | C12 | C13 | C14 | C15 | C16 |
| FF property | 3.31 | 4.21 | 4.10 | 4.18 | 3.98 | 3.86 | 4.05 | 4.03 |
| Finished texture | × | Δ | Δ | Δ | Δ | Δ | ○ | ○ |

**Table 11**

| Evaluation items | Examples | | | | | | | |
|---|---|---|---|---|---|---|---|---|
| | C17 | C18 | C19 | C20 | C21 | C22 | C23 | C24 |
| NV (% by weight) | 21.7 | 24.8 | 19.5 | 25.4 | 21.5 | 25.7 | 30.5 | 19.5 |
| FF property | 4.05 | 3.72 | 4.15 | 3.63 | 4.06 | 3.71 | 3.35 | 4.58 |
| Finished texture | ○ | ○ | ○ | ○ | ○ | ○ | × | ○ |

It is excellent that FF property is 3.80 or more and NV is 24.0 or more.

From the above results, the Examples C1 to C24 having high solid contents provide excellent FF properties and excellent appearances. The Examples C1 to C8 having very high solid contents provide excellent flip-flop properties and excellent finished textures. These results correspond to the fact that the ratio of the urethane compound (A) as the viscosity improving agent to the urethane compound (B) as the viscosity improving agent is within the defined preferable range, and to the fact that the total content of the urethane compounds (A) and (b) is within the defined preferable range.

The present invention can establish both of the sufficient solid content ratio in the water-borne coating composition and the excellent flip-flop property in accordance with the sufficient fine particles, which were not realized by the prior arts.

## INDUSTRIAL APPLICABILITY

The water-borne metallic color coating composition according to the present invention is preferably applicable to a coating procedure for an automobile with a water-borne metallic color coating composition.

## Claims

**1.** A water-borne metallic color coating composition comprising a film forming resin, a curing agent and a luster color pigment, wherein
the film forming resin comprises an acrylic resin emulsion, which is obtainable by a two-stage emulsion polymerization, and which has an acid value within a range of from 1 to 30 mgKOH/g (as a basis of the solid resin content), a hydroxyl value within a range of from 10 to 150 mgKOH/g (as a basis of the solid resin content), and a particle size within a range of from 20 to 140 nm, and
the curing agent is an aqueous dispersion of a hydrophobic melamine resin having a particle size within a range of from 20 to 140 nm.

**2.** The water-borne metallic color coating composition according to claim 1, wherein the acrylic resin emulsion is obtainable by a two-stage emulsion polymerization of a monomer mixture comprising 0.05 to 30.0% by weight of an unsaturated monomer having at least two unsaturated double bonds relative to the weight of the solid content of the film forming resin.

**3.** The water-borne metallic color coating composition according to claim 2, wherein the unsaturated monomer having at least two unsaturated double bonds is at least one monomer selected from the group consisting of ethylene glycol di(meth)acrylate, diethylene glycol di(meth)acrylate, trimethylolpropane di(meth)acrylate, trimethylolpropane tri (meth)acrylate, glycerin di(meth)acrylate and allyl (meth)acrylate.

**4.** The water-borne metallic color coating composition according to claim 1, wherein the film forming resin further

comprises 0.01 to 10% by weight of a polyoxyalkylene compound having the formula (1) :

$$H(-OR)_f-OH \qquad (1)$$

wherein
R is an alkyl group having 2 to 5 carbon atoms, which may have a branched chain, and
f is an integer of 100 to 18000,
relative to the weight of the solid resin content in the coating composition.

**5.** The water-borne metallic color coating composition according to claim 4, wherein the polyoxyalkylene compound has a weight average molecular weight (Mw) within a range of from 10000 to 1000000.

**6.** The water-borne metallic color coating composition according to any one of claims 1 to 5, which further comprises a viscosity improving agent comprisinga mixture of an urethane compound (A) represented by the general formula (1):

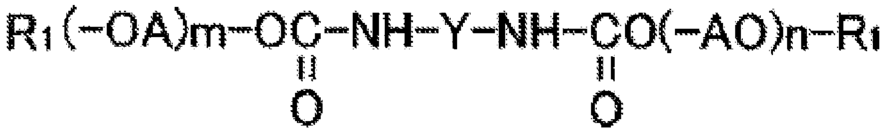

(1)

,

and a urethane compound (B) represented by the general formula (2) :

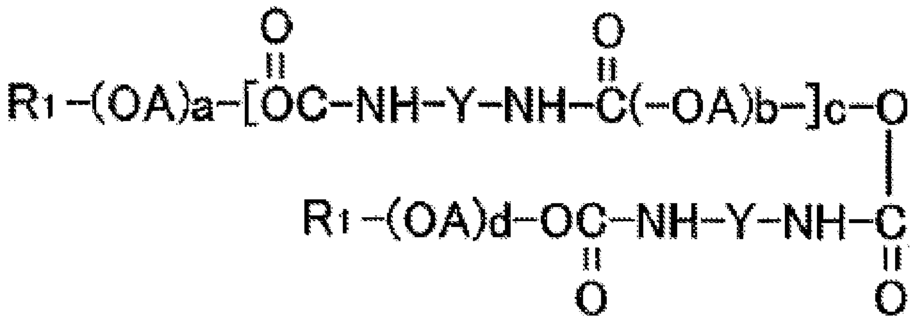

(2)

wherein
$R_1$ is the same or different and represents a hydrocarbon group having 8 to 24 carbon atoms,
Y represents a reactive residual group resulted from elimination of an isocyanate group from a diisocyanate,
OA and AO independently represent an oxyalkylene group having 2 to 4 carbon atoms,
O represents an oxygen atom,
C represents a carbon atom,
N represents a nitrogen atom,
m and n independently represent an integer of 20 to 500,
a and d independently represent an integer of 1 to 100,
b represents an integer of 40 to 500,
c represents an integer of 1 to 5,
(b x c) is 150 to 2500,
f represents an integer of 200 to 25000, and
R, Y and P may be independently the same or different, wherein each urethane compound has at least 80% by weight of oxyethylene group(s) relative to the total weight of oxyalkylene group(s), and
wherein the weight ratio of the urethane compound (A) / the urethane compound (B) is within a range of from 95/5 to 5/95, and the total content of the urethane compounds (A) and (B) is within a range of from 0.2 to 4.0% by weight relative to the solid resin content in the water-borne metallic color coating composition.

**7.** The water-borne metallic color coating composition according to claim 6, wherein, in the two-stage emulsion polymerization, an acrylic resin emulsion obtainable by emulsion polymerization at second stage has an acid value within a range of from 25 to 200 mgKOH/g.

**8.** A method for forming a multilayered coating film, which comprises:

Step (I) of applying a water-borne base coating composition on an article to form a base coating;
Step (II) of applying a clear coating composition on the base coating, without curing the base coating, to form a clear coating; and
Step (III) of simultaneously heating the base coating and the clear coating,

wherein the water-borne base coating composition is the water-borne metallic color coating composition according to any one of claims 1 to 7.

**9.** A multilayered coating film formed by the method for forming a multilayered coating film according to claim 8.

FIG.1

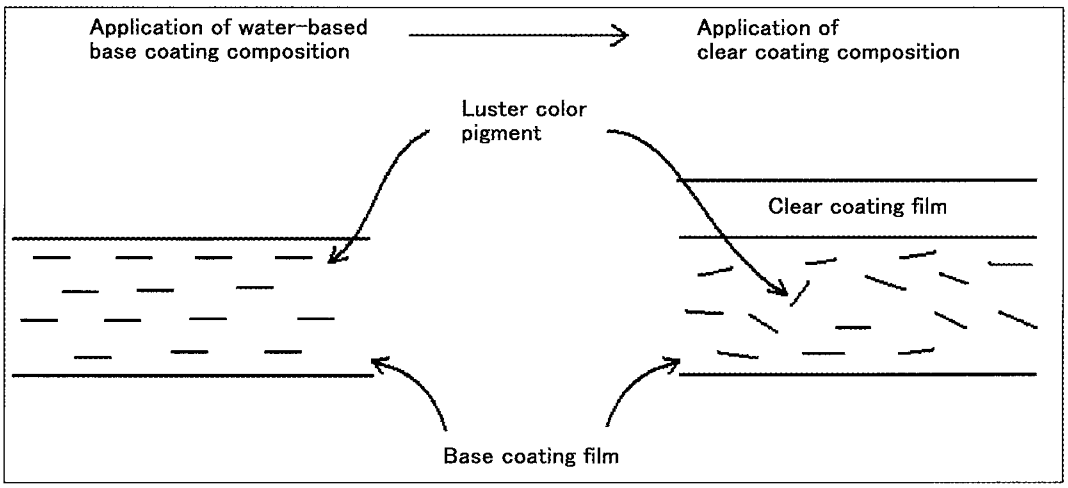
Application of water-based base coating composition
Application of clear coating composition
Luster color pigment
Clear coating film
Base coating film

FIG.2

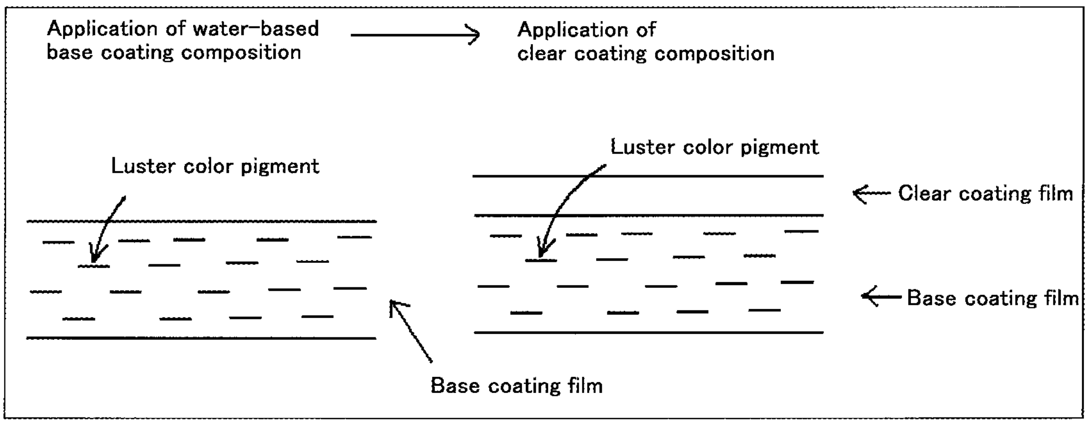
Application of water-based base coating composition
Application of clear coating composition
Luster color pigment
Luster color pigment
Clear coating film
Base coating film
Base coating film

**INTERNATIONAL SEARCH REPORT**

International application No.
PCT/JP2006/314898

A. CLASSIFICATION OF SUBJECT MATTER
*C09D133/00*(2006.01)i, *B05D1/36*(2006.01)i, *B05D5/06*(2006.01)i, *B05D7/24*(2006.01)i, *C09D5/02*(2006.01)i, *C09D5/29*(2006.01)i, *C09D151/00*(2006.01)i, *C09D161/28*(2006.01)i

According to International Patent Classification (IPC) or to both national classification and IPC

B. FIELDS SEARCHED

Minimum documentation searched (classification system followed by classification symbols)
C09D1/00-C09D201/10, B05D1/00-B05D7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X<br>P,A | WO 2006/054611 A1 (Nippon Paint Co., Ltd.), 26 May, 2006 (26.05.06), Full text (particularly, Claims; Par. No. [0074]) (Family: none) | 1-5,8,9<br>6,7 |
| X<br>Y | WO 96/33814 A1 (Kansai Paint Co., Ltd.), 31 October, 1996 (31.10.96), Full text (particularly, Claims; pages 5, 17) & EP 823289 A1 & JP 8-532356 A & KR 98703484 A | 1-3,8,9<br>4-7 |
| Y | JP 2-255871 A (Kansai Paint Co., Ltd.), 16 October, 1990 (16.10.90), Full text (particularly, Claims; page 5) & US 4980409 A | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 October, 2006 (10.10.06) | 17 October, 2006 (17.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/314898

C (Continuation). DOCUMENTS CONSIDERED TO BE RELEVANT

| Category* | Citation of document, with indication, where appropriate, of the relevant passages | Relevant to claim No. |
|---|---|---|
| X | JP 2003-286434 A (Nippon Paint Co., Ltd.), 10 October, 2003 (10.10.03), Full text (particularly, Claims; Par. Nos. [0031], [0084]) & WO 03/64546 A1 & JP 2003-286450 A & EP 1384758 A1 & US 2004/0096590 A1 & KR 2004083337 A & CN 1615345 A | 1-9 |
| X<br>Y | JP 7-41729 A (Kansai Paint Co., Ltd.), 10 February, 1995 (10.02.95), Full text (particularly, Claims; Par. Nos. [0029], [0039], [0058]) & EP 626417 A1 & US 5539049 A | 1-3,8,9<br>4-7 |
| X<br>Y | JP 63-193968 A (Kansai Paint Co., Ltd.), 11 August, 1988 (11.08.88), Full text (particularly, Claims; page 4) & GB 2200644 A & DE 3803522 A1 & US 4900774 A | 1-3,8,9<br>4-7 |
| X<br>Y | JP 3-68478 A (Kansai Paint Co., Ltd.), 25 March, 1991 (25.03.91), Full text (particularly, Claims; pages 9 to 10) & GB 2234691 A & DE 4025029 A1 & US 5130167 A | 1-3,8,9<br>4-7 |
| X<br>Y | JP 2-92974 A (Kansai Paint Co., Ltd.), 03 April, 1990 (03.04.90), Full text (particularly, Claims; page 9) & EP 346886 A1 & JP 1-315451 A & US 5288771 A | 1-3,8,9<br>4-7 |
| X<br>Y | JP 8-209059 A (NOF Corp.), 13 August, 1996 (13.08.96), Full text (particularly, Claims; Par. No. [0027]) (Family: none) | 1-3,8,9<br>4-7 |
| X<br>Y | JP 2001-240791 A (Nippon Paint Co., Ltd.), 04 September, 2001 (04.09.01), Full text (particularly, Claims; Par. No. [0031]) & GB 2359557 A & US 2001/0033897 A1 & KR 2001085297 A | 1-3,8,9<br>4-7 |
| X<br>Y | JP 8-199114 A (NOF Corp.), 06 August, 1996 (06.08.96), Full text (particularly, Claims; Par. No. [0068]) & WO 96/22339 A1 & EP 804515 A1 & KR 98701541 A & US 5942570 A | 1-3,8,9<br>4-7 |

Form PCT/ISA/210 (continuation of second sheet) (April 2005)

**INTERNATIONAL SEARCH REPORT**

International application No.
PCT/JP2006/314898

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-131488 A (Nippon Paint Co., Ltd.), 15 May, 2001 (15.05.01), Full text (particularly, Claims) (Family: none) | 1-9 |
| Y | JP 2002-080790 A (Nippon Paint Co., Ltd.), 19 March, 2002 (19.03.02), Full text (particularly, Claims) (Family: none) | 1-9 |
| A | JP 2000-303006 A (San Nopco Ltd.), 31 October, 2000 (31.10.00), Full text (particularly, Claims) (Family: none) | 1-9 |
| A | JP 2001-303461 A (Asahi Denka Kogyo Kabushiki Kaisha), 31 October, 2001 (31.10.01), Full text (particularly, Claims; Par. No. [0053]) & KR 2002003148 A | 1-9 |

Form PCT/ISA/210 (continuation of second sheet) (April 2005)

**INTERNATIONAL SEARCH REPORT**

International application No.
PCT/JP2006/314898

(1)
It is difficult to consider that the polyoxyalkylene compound represented by the formula (1) (or the definition of symbols) in claim 4 is technically unerring.

(2)
It is difficult to consider that the urethane compound (B) represented by the general formula (2) in claim 6 has an unerring chemical structural formula.

(3)
The meaning of the definitions of "f," "R," and "P" among the definitions of symbols in the general formulae (1) and (2) given in claim 6 is unclear.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5399232 A
- JP 2004315623 A
- JP 2002308993 A
- JP S63193968 A
- JP H07041729 B
- JP 2004332110 A
- JP 2004349019 A
- JP 2000303006 A


### Non-patent literature cited in the description


- **K.W., SUH ; D. H. CLARKE.** *J. Polymer. Sci.,* 1967, vol. A-1 (5), 1671